(19) Europäisches Patentamt
European Patent Office
Office européen des brevets

(11) **EP 4 234 443 A2**

(12) **EUROPEAN PATENT APPLICATION**

(43) Date of publication:
**30.08.2023 Bulletin 2023/35**

(51) International Patent Classification (IPC):
**B65G 1/04** (2006.01)

(21) Application number: **23171789.3**

(52) Cooperative Patent Classification (CPC):
**B65G 1/0492**; B65G 2207/40

(22) Date of filing: **15.12.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.12.2010 US 42320610 P**
**15.12.2010 US 42334010 P**
**15.12.2010 US 42330810 P**

(62) Document number(s) of the earlier application(s) in accordance with Art. 76 EPC:
**16166265.5 / 3 081 511**
**11804879.2 / 2 651 786**

(71) Applicant: **SYMBOTIC, LLC**
**Wilmington, MA 01887 (US)**

(72) Inventors:
• **TOEBES, Stephen**
**Chelmsford, 01824 (US)**
• **SULLIVAN, Robert**
**Wilmington, 01887 (US)**
• **LERT, John**
**Wakefield, 01880 (US)**
• **CYRULIK, Michael**
**HOLLIS, NH03049 (US)**

(74) Representative: **Ipside**
**7-9 Allées Haussmann**
**33300 Bordeaux Cedex (FR)**

Remarks:
This application was filed on 05-05-2023 as a divisional application to the application mentioned under INID code 62.

(54) **METHOD FOR DETERMINING A LOCTION OF AN AUTONOMOUS VEHICLE**

(57)     A storage and retrieval system including a storage structure (130) having storage shelves (600), each storage shelf (600) having slats for supporting stored items where the slats are spaced apart from each other by a predetermined distance, an autonomous transport vehicle (110) including at least one sensor configured to sense each of the slats and output a signal indicating when a stat is sensed, and a controller for verifying a location of the autonomous transport vehicle (110) within the storage structure (130) based on at least the output signal.

FIG.7A

EP 4 234 443 A2

**Description**

CROSS-REFERENCE TO RELATED APPLICATIONS

This application is a non-provisional of and claims the benefit of United States patent application number 13/327,035 filed on December 15, 2011 which further claims priority to United States provisional patent application number 61/423,206 filed on December 15, 2010, United States patent application number 13/326,565 filed on December 15, 2011 which further claims priority to United States provisional patent application number 61/423,308 filed on December 15, 2010, and United States patent application number 13/326,674 filed on December 15, 2011 which further claims priority to United States provisional patent application number 61/423,340 filed on December 15, 2010, the disclosures of which are incorporated herein by reference in their entireties.

BACKGROUND

1. Field

The embodiments generally relate to storage and retrieval systems and, more particularly, to autonomous transports of the storage and retrieval systems.

2. Brief Description of Related Developments

Warehouses for storing case units may generally comprise a series of storage racks that are accessible by transport devices such as, for example, fork lifts, carts and elevators that are movable within aisles between or along the storage racks or by other lifting and transporting devices. These transport devices may be automated or manually driven. Generally the items transported to/from and stored on the storage racks are contained in carriers, for example storage containers such as trays, totes or shipping cases, or on pallets. Also, in general, when areas of the storage and retrieval system require maintenance humans and, for example, the transporting devices and other moving structures of the storage and retrieval system have an opportunity to occupy substantially the same space within the storage and retrieval system substantially at the same time.

When transporting the cases to and from the storage racks with automated transports it would be advantageous to be able to locate the automated transports relative to a case holding area for accurately picking and placing cases to and from the case holding area.

It would be advantageous to provide maintenance access zones that are capable of isolating areas of the storage and retrieval system when maintenance is performed.

In addition, the storage of items within, for example, a warehouse generally requires a large building or storage structure space with an associated footprint.

As may be realized, length of the storage aisles of the warehouse structure and the travel paths for accessing each of these storage aisles depends on the amount of items (e.g. goods) stored in the warehouse. As may also be realized, stored items within the storage space are demanded at a given output (such as for subsequent shipping) at a desired rate (e.g. throughput) that is effected by the storage and retrieval system. In one example of a typical warehouse, to keep the length of the travel paths for accessing each of the storage/picking aisles at a minimum, the storage aisles must have a sufficient length for storing all of the desired goods. However, the length of the each of the storage aisles may be substantially prohibitive due to, for example, the building in which the storage structure is located and/or the distance traveled to access items within the storage aisles being excessive causing excessive travel or transport time and a corresponding deleterious effect on throughput. To prevent excessively long storage aisles the width of the storage structure may be adjusted so that the length of each storage aisle is decreased and the number of storage aisles is increased. However, increasing the number of the storage aisles also increases the distance traveled along the travel paths for accessing each of the storage aisles. As with the long storage aisles, the length of the travel paths may become substantially prohibitive for reasons similar to those described above with respect to the length of the storage aisles.

It would be advantageous to have a warehouse storage structure that provides substantially short travel distances and times along the travel paths as well as within the storage aisles.

BRIEF DESCRIPTION OF THE DRAWINGS

The foregoing aspects and other features of the disclosed embodiments are explained in the following description, taken in connection with the accompanying drawings, wherein:

Fig. 1A schematically illustrates an exemplary storage and retrieval system in accordance with the embodiments;

Fig. 1B is a schematic illustration of a portion of the storage and retrieval system of Fig. 1A;

Fig. 2 illustrates a schematic plan view of an exemplary storage and retrieval system in accordance with the embodiments;

Fig. 3 illustrates a schematic plan view of an exemplary storage and retrieval system in accordance with the embodiments;

Fig. 4 illustrates a schematic plan view of another exemplary storage and retrieval system in accordance with the embodiments;

Figs. 5 illustrate structural portions of a storage and retrieval system in accordance with the embodiments;

Fig. 6 is a schematic illustration of an autonomous transport vehicle and a portion of a storage shelf in accordance with the embodiments;

Figs. 7A and 7B illustrate storage shelves and an exemplary autonomous transport vehicle in accordance with the embodiments;

Fig. 7C is a schematic illustration of an assembly jig in accordance with the embodiments;

Fig. 8 is a schematic illustration of an autonomous transport vehicle and a portion of a storage shelf in accordance with the embodiments;

Fig. 9 is a schematic illustration of sensor output signals in accordance with the embodiments;

Fig. 10 is a schematic illustration of a portion of a storage shelf and sensor beam in accordance with the embodiments;

Fig. 11 is a flow diagram in accordance with the embodiments;

Fig. 12 is a schematic illustration of an autonomous transport vehicle and a conveyor shelf in accordance with the embodiments;

Fig. 13 is a flow diagram in accordance with the embodiments;

Figs. 14 and 15 are schematic illustrations of a portion of the storage and retrieval system in accordance with the embodiments;

Fig. 16 is a schematic illustration of a portion of the storage and retrieval system in accordance with the embodiments;

Figs. 17-17B are schematic illustrations of portions of the storage and retrieval system in accordance with the embodiments;

Fig. 18 is an exemplary flow chart in accordance with the embodiments;

Fig. 19 is a schematic illustration of an exemplary storage structure in accordance with the embodiments;

Figs. 20A-20F are schematic illustrations of other exemplary storage structures in accordance with embodiments;

Fig. 20G is a schematic illustration of an autonomous transport in accordance with the embodiments;

Fig. 20H is a schematic illustration of an autonomous transport in accordance with the embodiments;

Fig. 21 is a schematic illustration of yet another exemplary storage structure in accordance with the embodiments;

Fig. 22 is a schematic illustration of still another exemplary storage structure in accordance with the embodiments;

Fig. 23 is a schematic illustration of an exemplary storage structure in accordance with the embodiments;

Fig. 24 is a schematic illustration of another exemplary storage structure in accordance with the embodiments;

Fig. 25 is a schematic illustration of yet another exemplary storage structure in accordance with the embodiments;

Fig. 26 is a schematic illustration of still another exemplary storage structure in accordance with the embodiments;

Fig. 27 is a schematic illustration of another exemplary storage structure in accordance with the embodiments;

Fig. 28 is a schematic illustration of an autonomous transport vehicle in accordance with the embodiments;

Fig. 29 is a schematic illustration of a portion of a storage shelf in accordance with the embodiments;

Fig. 30 is a schematic illustration of a portion of the transport vehicle of Fig. 11 in accordance with the embodiments;

Fig. 31 is a schematic illustration of a portion of the transport vehicle of Fig. 11 in accordance with the embodiments;

Fig. 31A is a schematic illustration of a portion of a positioning system in accordance with the embodiments;

Fig. 32 is a flow diagram in accordance with the embodiments;

Fig. 33 is a schematic illustration of a portion of a picking aisle and a transport vehicle in accordance with the embodiments; and

Fig. 34 is a schematic illustration of a portion of the storage and retrieval system in accordance with the embodiments.

DETAILED DESCRIPTION OF THE EXEMPLARY EMBODIMENT(s)

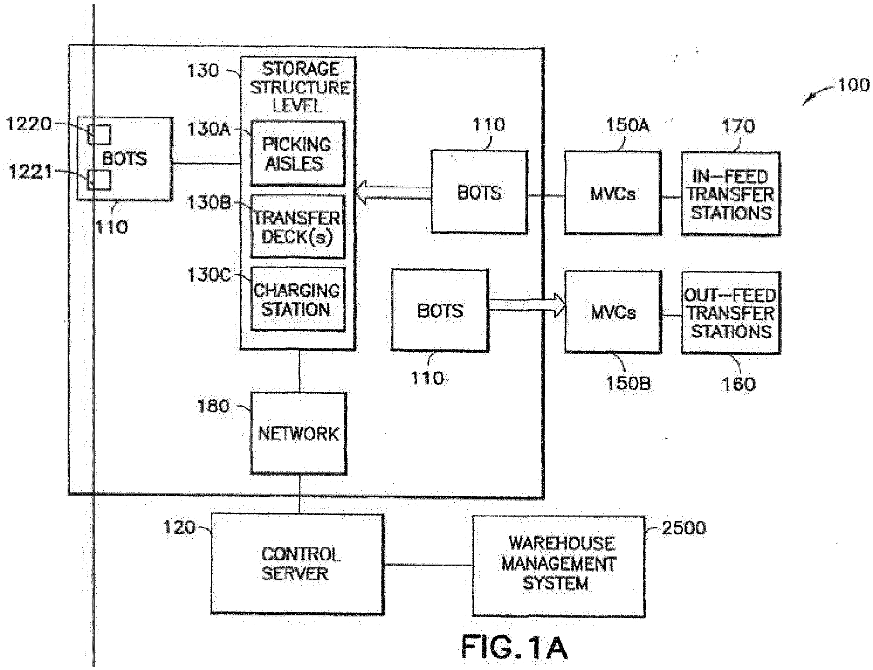

Fig. 1A schematically illustrates an exemplary storage and retrieval system in accordance with the embodiments. Although the disclosed embodiments will be described with reference to the embodiments shown in the drawings, it should be understood that the disclosed embodiments can be embodied in many alternate forms. In addition, any suitable size, shape or type of elements or materials could be used.

In accordance with the embodiments the storage and retrieval system 100 may operate in a retail distribution center or warehouse to, for example, fulfill orders received from retail stores for case units (where case units as used herein means items not stored in trays, on totes or on pallets, e.g. uncontained or items stored in trays, totes or on pallets) . It is noted that the case units may include cases of items (e.g. cases of soup cans, boxes of cereal, etc.) or individual items that are adapted to be taken off of or placed on a pallet. In accordance with the embodiments, shipping cases or case units (e.g. cartons, barrels, boxes, crates, jugs, totes, pallets or any other suitable device for holding case units) may have variable sizes and may be used to hold items in shipping and may be configured so they are capable of being palletized for shipping. It is noted that when, for example, bundles or pallets of case units arrive at the storage and retrieval system the content of each pallet may be uniform (e.g. each pallet holds a predetermined number of the same item - one pallet holds soup and another pallet holds cereal) and as pallets leave the storage and retrieval system the pallets may contain any suitable number and combination of different items (e.g. each pallet may hold different types of items - a pallet holds a combination of soup and cereal). It should be understood that the embodiments of the storage and retrieval system described herein may be applied to any environment in which case units are stored and retrieved.

The storage and retrieval system 100 may be configured for installation in, for example, existing warehouse structures or adapted to new warehouse structures. In the embodiments, the storage and retrieval system may include in-feed and out-feed transfer stations 170, 160, multilevel vertical conveyors 150A, 150B, a storage structure 130, and a number of autonomous transport vehicles or robots 110 (referred to herein as "bots"). The storage and retrieval system may also include robot or bot transfer stations (as described in, for example, United States Patent Application Number 12/757,220, entitled "STORAGE AND RETRIEVAL SYSTEM" and filed on April 9, 2010, the disclosure of which is incorporated by reference herein in its entirety) that may provide an indirect interface between the bots 110 and the multilevel vertical conveyor 150A, 150B. The in-feed transfer stations 170 and out-feed transfer stations 160 may operate together with their respective multilevel vertical conveyors 150A, 150B for bi-directionally transferring case units to and from one or more levels of the storage structure 130. It is noted that while the multilevel vertical conveyors are described herein as being dedicated inbound or in-feed conveyors 150A and outbound or out-feed conveyors 150B, each of the conveyors 150A, 150B may be used for both inbound and outbound transfer of case units/items from the storage and retrieval system. The multilevel vertical conveyors may be any suitable lifting devices for transporting case units between levels of the storage and retrieval system. It is noted that while multilevel vertical conveyors are described herein in other aspects the conveyors may be any suitable conveyors or transfer/picking devices having any suitable transport path orientation. Some non-limiting suitable examples of multilevel vertical conveyors can be found in, for example, United States Provisional Patent Application entitled "LIFT INTERFACE FOR STORAGE AND RETRIEVAL SYSTEMS" with Attorney Docket Number 1127P014525-US (-#1) and filed on December 15, 2010 (now US Pat. App. Number 13/327,088 with Attorney Docket Number 1127P014525-US (PAR) filed on December 15, 2011), and United States Patent Application Number 12/757,354, entitled "LIFT INTERFACE FOR STORAGE AND RETRIEVAL SYSTEMS" and filed on April 9, 2010 (the disclosures of which are incorporated by reference herein in their entireties) and United States Patent Application Number 12/757,220, entitled "STORAGE AND RETRIEVAL SYSTEM," (previously incorporated by reference). For example, the multilevel vertical conveyors may have any suitable number of support shelves for transporting the case units to a predetermined level of the storage and retrieval system. The support shelves may have slatted supports configured to allow fingers of the bots 110 or in-feed/out-feed transfer stations 170, 160 to pass between the slats for transferring case units to and from the conveyor. It is noted that in the embodiments transfer of case units between the bots and the multilevel vertical conveyors may occur in any suitable manner.

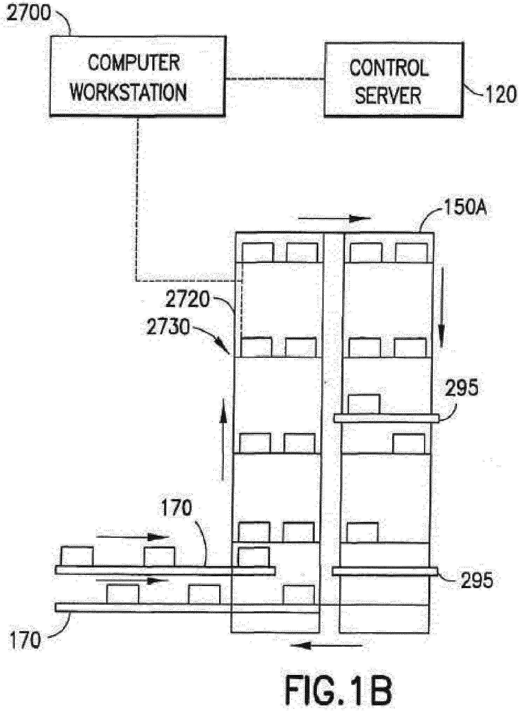

Referring also to Fig. 1B, generally, the multilevel vertical conveyors include payload shelves 2730 attached to chains, belts or other suitable transmission(s) 2720 that form continuously moving or circulating vertical loops (the shape of the loop shown in the Figs. is merely exemplary and in the embodiments the loop may have any suitable shape including rectangular and serpentine) that move at a substantially constant rate, so that the shelves 2730 use what may be referred to as the "paternoster" principle of continuous conveyance, with loading and unloading performed at any point in the loop without slowing or stopping. The multilevel vertical conveyors 150A, 150B may be controlled by a server, such as for example, control server 120, or any other suitable controller. One or more suitable computer workstations 2700 may be connected to the multilevel vertical conveyors 150A, 150B and the server 120 in any suitable manner (e.g. wired or wireless connection) for providing, as an example, inventory management, multilevel vertical conveyor functionality and control, and customer order fulfillment. As may be realized, the computer workstations 2700 and/or server 120 may be programmed to control the in-feed and/or out-feed conveyor systems. In the embodiments, the computer workstations 2700 and/or server 120 may also be programmed to control the transfer stations 140. In the embodiments, one or more of the workstations 2700 and control server 120 may include a control cabinet, a programmable logic controller and variable frequency drives for driving the multilevel vertical conveyors 150A, 150B. In the embodiments the workstations 2700 and/or control server 120 may have any suitable components and configuration. In the embodiments, the workstations 2700 may be configured to substantially remedy any exceptions or faults in the in-feed and/or out-feed conveyor systems substantially without operator assistance and communicate fault recovery scenarios with the control server 120 and/or vice versa.

As may be realized, the storage and retrieval system 100 may include multiple in-feed and out-feed multilevel vertical conveyors 150A, 150B that are accessible by, for example, bots 110 on each level of the storage and retrieval system 100 so that one or more case unit(s) can be transferred from a multilevel vertical conveyor 150A, 150B to each storage space on a respective level and from each storage space to any one of the multilevel vertical conveyors 150A, 150B on a respective level. The bots 110 may be configured to transfer the case units between the storage spaces and the multilevel vertical conveyors with one pick (e.g. substantially directly between the storage spaces and the multilevel vertical conveyors). By way of further example, the designated bot 110 picks the case unit(s) from a shelf of a multilevel vertical conveyor, transports the case unit(s) to a predetermined storage area of the storage structure 130 and places the case unit(s) in the predetermined storage area (and vice versa).

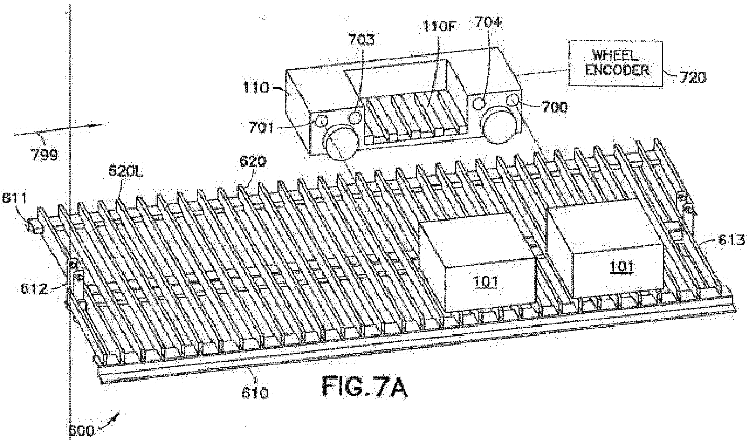

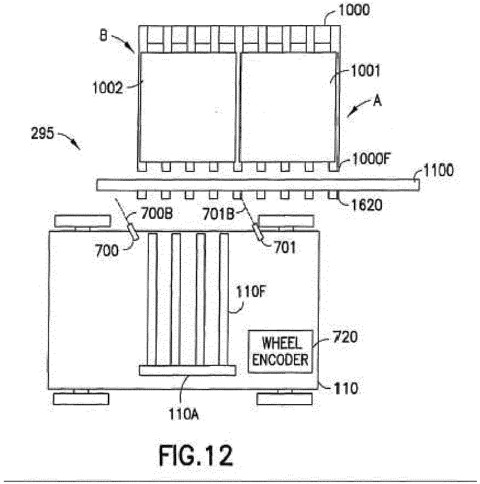

The bots 110 may be configured to place case units, such as the above described retail merchandise, into picking stock in the one or more levels of the storage structure 130 and then selectively retrieve ordered items for shipping the ordered items to, for example, a store or other suitable location. In the embodiments, the bots 110 may interface in any suitable manner with the multilevel vertical conveyors 150A, 150B such as through, for example, extension of a transfer arm or effector 110A (Fig. 12) of the bot (which may have fingers 110F (Figs. 7A and 12) for interfacing with slatted support shelves of the multi-level vertical conveyors) relative to a frame of the bot. Suitable examples of bots are described in United States Patent Application Number 12/757,312, entitled "AUTONOMOUS TRANSPORTS FOR STORAGE AND RETRIEVAL SYSTEMS" and filed on April 9, 2010, United States Provisional Patent Application entitled "BOT PAYLOAD ALIGNMENT AND SENSING" with Attorney Docket Number 1127P014263-US (-#1) (Ser. No. 61/423,220) and filed on December 15, 2010 (now US Pat. App. No. 13/327,040 with Attorney Docket Number 1127P014263-US (PAR) filed on December 15, 2011), United States Provisional Patent Application entitled "AUTOMATED BOT WITH TRANSFER ARM" with Attorney Docket Number 1127P014264-US (-#1) (Ser. No. 61/423,365) and filed on December 15, 2010 (now US Pat. App. No. 13/326,952 with Attorney Docket Number 1127P014264-US (PAR) filed on December 15, 2011), and United States Provisional Patent Application entitled "AUTOMATED BOT TRANSFER ARM DRIVE SYSTEM" with Attorney Docket Number 1127P014265-US (-#1) (Ser. No. 61/423,388) and filed on December 15, 2010 (now US Pat. App. NO. 13/326,993 with Attorney Docket Number 1127P014265-US (PAR) filed on December 15, 2011), the disclosures of which are incorporated by reference herein in their entireties.

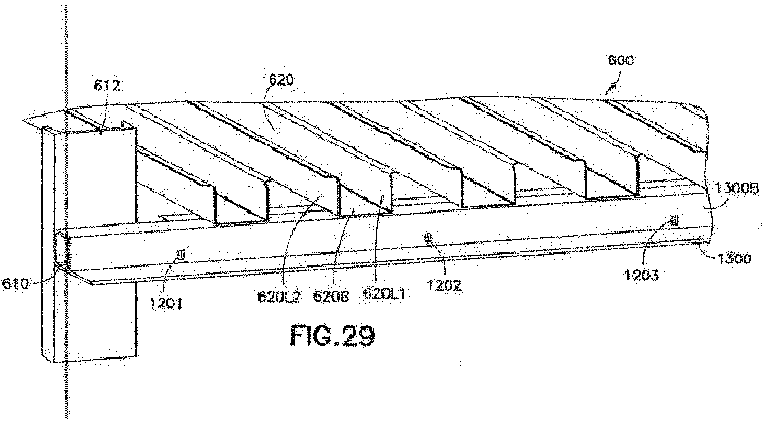

The storage structure 130 may include multiple levels of storage rack modules where each level includes an array of storage spaces (arrayed on the multiple levels and in multiple rows on each level), picking aisles 130A formed between the rows of storage spaces, and transfer decks 130B. It is noted that the bots 110 may be configured to traverse the transfer decks 130B while being mechanically unconstrained and may be configured to traverse the picking aisles 130A while being mechanically constrained by, for example, rails or other guiding features located in the picking aisles 130A. Any bot 110 traveling on a level of the storage structure may enter any one of the picking aisles 130A located on that level which may allow for a variance between a frame of the bot 110 and targets or positioning determining features 1201-1203 (Fig. 29) to exist. It is also noted that each level may also include respective bot transfer stations that provide an indirect interface between the bots and the multilevel vertical conveyors. In the embodiments, the picking aisles 130A and transfer decks 130B may be arranged for allowing the bots 110 to traverse respective levels of the storage structure 130 for placing case units into picking stock and to retrieve the ordered case units. As may be realized, the storage and retrieval system may be configured to allow random accessibility to the storage spaces. For example, all storage spaces in the storage structure 130 may be treated substantially equally when determining which storage spaces are to be used when picking and placing case units from/to the storage structure 130 such that any storage space of sufficient size can be used to store items. The storage structure 130 of the embodiments may also be arranged such that there is no vertical or horizontal array partitioning of the storage structure. For example, each multilevel vertical conveyor 150A, 150B is common to all storage spaces (e.g. the array of storage spaces) in the storage structure 130 such that any bot 110 can access each storage space and any multilevel vertical conveyor 150A, 150B can receive case units from any storage space on any level so that the multiple levels in the array of storage spaces substantially act as a single level (e.g. no vertical partitioning). The multilevel vertical conveyors 150A, 150B can also receive case units from any storage space on any level of the storage structure 130 (e.g. no horizontal partitioning). It is noted that the storage and retrieval system may be configured so that each multilevel vertical conveyor serves a predetermined area of the array of storage spaces.

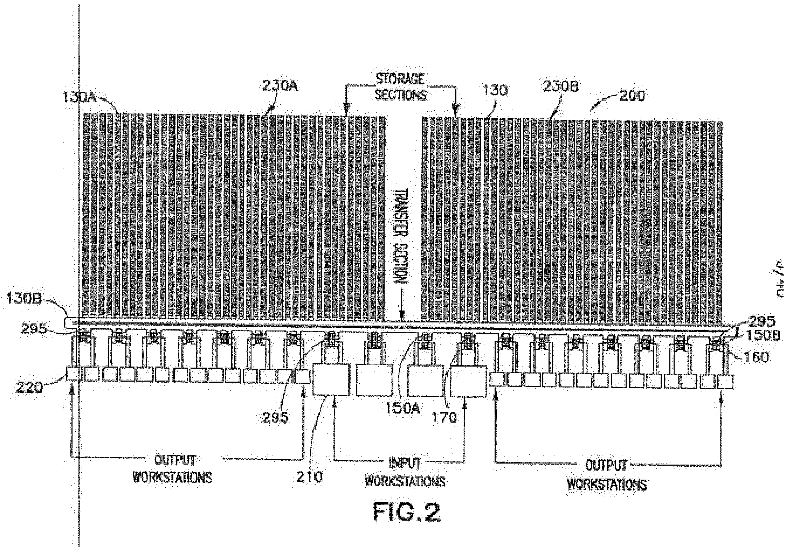

The storage structure 130 may also include charging stations 130C for replenishing, for example, a battery pack of the bots 110. In the embodiments, the charging stations 130C may be located at, for example, transfer areas 295, 895 (Figs. 2, 3, 4 and 16) of the transfer deck 130B so that the bots 110 can substantially simultaneously transfer items, for example, to and from a multilevel vertical conveyor 150A, 150B while being charged. The bots 110 and other suitable features of the storage and retrieval system 100 may be controlled by, for example, one or more central system control computers (e.g. control server) 120 through, for example, any suitable network 180. The network 180 may be a wired network, a wireless network or a combination of a wireless and wired network using any suitable type and/or number of communication protocols. It is noted that, in the embodiments, the system control server 120 may be configured to manage and coordinate the overall operation of the storage and retrieval system 100 and interface with, for example, a warehouse management system 125, which in turn manages the warehouse facility as a whole. The control server 120 may be substantially similar to that described in, for example, United States Patent Application Number 12/757,337, entitled "CONTROL SYSTEM FOR STORAGE AND RETRIEVAL SYSTEMS" and filed on April 9, 2010 (the disclosure of which is incorporated by reference herein in its entirety).

Referring also to Fig. 2, an exemplary configuration of the storage and retrieval system 100 is shown. Other suitable exemplary configurations of storage and retrieval systems can be found in, for example, United States Patent Application Number 12/757,381, entitled "STORAGE AND RETRIEVAL SYSTEM" and filed on April 9, 2010, and United States Provisional Patent Application entitled "Warehousing Scalable Storage Structure" with Attorney Docket Number 1127P014551-US (-#1) (Ser. No. 61/423,340) and filed on December 15, 2010 (now US Pat. App. NO. 13/326,674 with Attorney Docket Number 1127P014551-US (PAR) filed on December 15, 2011), the disclosures of which are incorporated by reference herein in their entireties. It should be understood that the storage and retrieval system may have any suitable configuration. As can be seen in Fig. 2, the storage and retrieval system 200 is configured, for exemplary purposes only, as a single-ended picking structure in which only one side of the system 200 has a transfer section or deck 130B. The single-ended picking structure may be used in, for example, a building or other structure having loading docks disposed only on one side of the building. In this example, the storage and retrieval system 200 includes transfer deck(s) 130B and picking aisles 130A that allow bots 110 to traverse an entirety of a level of the storage structure 130 on which that bot 110 is located for transporting items between any suitable storage locations/picking aisles 130A and any suitable multilevel vertical conveyors 150A, 150B. The multilevel vertical conveyors 150A, 150B provide transport of case units into the storage and retrieval system 200 through input workstations 210 and provide output of case units from the storage and retrieval system 200 through output workstations 220. In the embodiments, the storage and retrieval system 200 includes a first and second storage section 230A, 230B located side by side so that the picking aisles of each section are substantially parallel with each other and facing the same direction (e.g. towards transfer deck 130B). It should be understood that in the embodiments the storage and retrieval system may have any suitable number of storage sections arranged relative to each other in any suitable configuration.

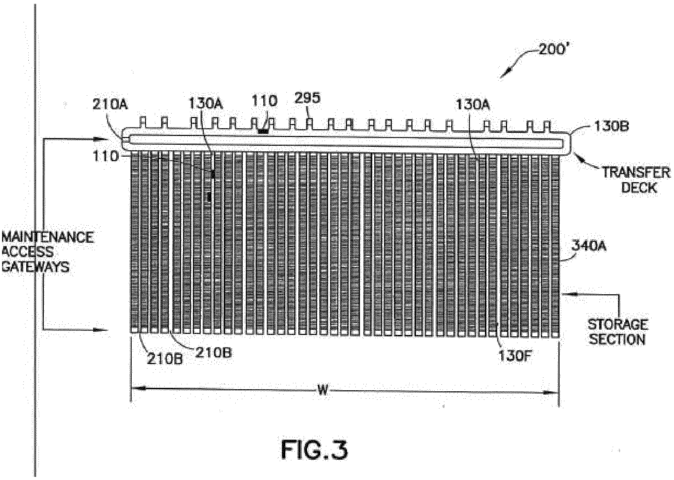

Referring also to Fig. 3, an exemplary configuration of the storage and retrieval system 100 is shown. Other suitable exemplary configurations of storage and retrieval systems can be found in, for example, United States Provisional Patent Application entitled "Warehousing Scalable Storage Structure" with Attorney Docket Number 1127P014551-US (-#1) (Ser. No. 61/423,340) and filed on December 15, 2010 (now US Pat. App. No. 13/326,674 with 1127P014551-US (PAR) filed on December 15, 2011), and United States Patent Application Number 12/757,381, entitled "STORAGE AND RETRIEVAL SYSTEM" and filed on April 9, 2010, the disclosures of which are incorporated by reference herein in their entireties. It should be understood that in alternate embodiments the storage and retrieval system may have any suitable configuration. As can be seen in Fig. 3, the storage and retrieval system 200 is configured, for exemplary purposes only, as a single-ended picking structure in which only one side of the system 200 has a transfer section or deck 130B. The single-ended picking structure may be used in, for example, a building or other structure having loading docks disposed only on one side of the building. In this example, the storage and retrieval system 200 includes transfer deck(s) 130B and picking aisles 130A that allow bots 110 to traverse an entirety of a level of the storage structure 130 on which that bot 110 is located for transporting items between any suitable storage locations/picking aisles 130A and any suitable multilevel vertical conveyors 150A, 150B (Fig. 1).

The storage and retrieval system 200 may include maintenance access gateways 210A, 210B that allow, for example, maintenance personnel (e.g. human access) to enter the storage and retrieval system 200 for accessing any suitable structure or component(s) of the storage and retrieval system. In this example a maintenance access gateway 210A is provided on one end of the transfer deck. Another maintenance access gateway may be provided at the ends of the picking aisles 130A opposite the transfer deck 130B. In the embodiments maintenance access gateways may be provided for each level of the storage and retrieval system and/or a single maintenance access gateway may serve multiple levels of the storage and retrieval system. It should also be understood that while only maintenance access gateways 210A, 210B are shown, the storage and retrieval system may have any suitable number of maintenance access gateways located at any suitable locations of the storage and retrieval system. The maintenance access gateways may provide access to one or more maintenance access zones each of which is capable of being "locked out" (e.g. moving storage and retrieval components within the zone are stopped and/or removed from the zone as will be described in greater detail below) when maintenance personnel are within the maintenance access zone. In this example, each of the picking aisles may be defined as an individual maintenance access zone and the transfer deck may be defined as another maintenance access zone. Each of the "aisle maintenance access zones" may be accessible through a respective one of the gateways 210B that, in this example, are arranged transverse to the aisles at a back of the storage and retrieval system. The "transfer deck maintenance access zone" may be accessible through, for example, the gateway 210A located at any suitable location of the transfer deck 130B. As may be realized, in alternate embodiments each of the aisles and transfer deck may be divided into one or more maintenance access zones that are capable of being individually locked out so that at least part of the transfer deck and/or picking aisle is operational (e.g. for storing and retrieving cases) while a maintenance access zone is locked out.

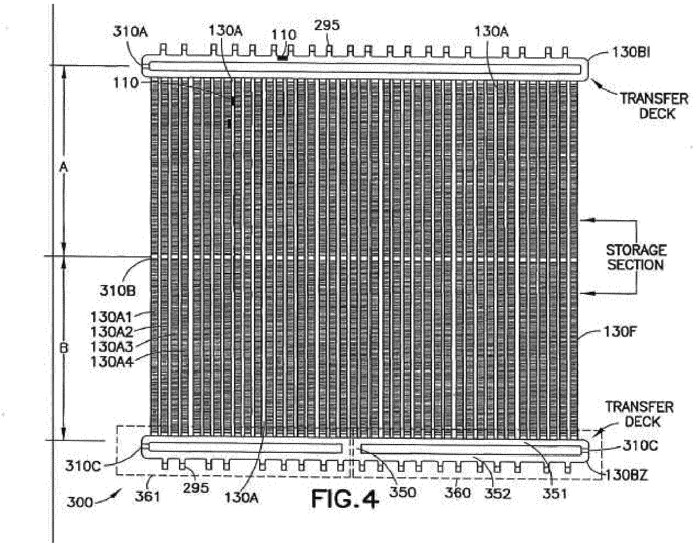

Referring to Fig. 4, another exemplary storage and retrieval system 300 is shown. The storage and retrieval system 300 may be substantially similar to storage and retrieval system 100 except as otherwise noted. In this example, the storage and retrieval system is illustrated as having a double-ended picking structure in which both sides of the system 300 have a transfer section or deck 130B1, 130B2. The double-ended picking structure may be used in, for example, a building or other structure having loading docks disposed on substantially opposite sides of the building. In this example, the storage and retrieval system 300 includes transfer decks 130B1, 130B2 and picking aisles 130A. A maintenance access gateway 310A is disposed to provide access to transfer deck 130B1. Maintenance access gateway 310B is disposed, for exemplary purposes only, substantially midway between transfer decks for providing access to the picking aisles. In this example, the maintenance access gateway 310B may be common to all picking aisles 130A but in alternate embodiments one or more of the picking aisles may have its/their own maintenance access gateway separate from the maintenance access gateway(s) of other picking aisles. In this example, each picking aisle 130A may be divided into two maintenance access zones (e.g. one zone is on side A of the storage structure and one zone is on side B of the storage structure) each of which are accessible through the maintenance access gateway 310B. It should be understood that in the embodiments, any suitable number of maintenance access gateways may be provided at any suitable number of locations along the length of the picking aisles between the transfer decks 130B1, 130B2 for providing any suitable number of access zones within the picking aisles (e.g. aisle access zones). Also in the embodiments, two maintenance access gateways 310C, 310D may be provided on opposite ends of the transfer deck 130B2. The transfer deck may also include a shunt 350 that allows bots to traverse between travel lanes 351, 352 of the transfer deck 130B2 without travelling the entire length of the transfer deck 130B2. The transfer deck 130B2 may be divided into two maintenance access zones 360, 361 so that one portion of the transfer deck 130B2 may remain operational (e.g. for storing and retrieving cases) while the other portion of the transfer deck 130B2 is locked out. As may be realized a boundary of the maintenance access zones 360, 361 may be located substantially at the shunt 350 so that the bots 110 travelling on the transfer deck 130B2 are able to travel in a loop around the operational portion of the transfer deck while the other portion of the transfer deck is locked out. In the embodiments, the transfer deck 130B2 may have any suitable number of shunts for forming any suitable number of maintenance access zones each of which are accessible through a respective maintenance access gateway or a common maintenance access gateway.

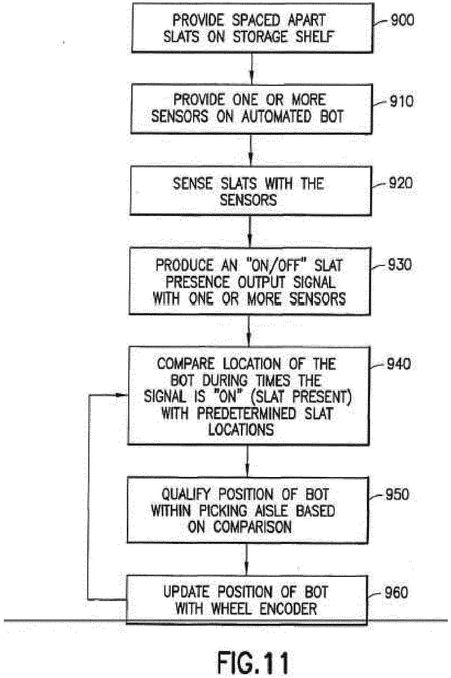

Referring to Figs. 1A, 5, 6, 7A and 7B, each of the storage bays 510, 511 of the storage structure 130 may hold the picking stock on storage shelves 600 that are separated by aisle spaces 130A. In the embodiments the storage bays 510, 511 and storage shelves 600 may be substantially similar to those described in, for example, United States Patent Application Number 12/757,220, entitled "STORAGE AND RETRIEVAL SYSTEM," and United States Patent Application Number 12/757,381, entitled "STORAGE AND RETRIEVAL SYSTEM" (both of which being previously incorporated by reference). For example, one or more support legs 620L1, 620L2 may be provided on the storage shelves 600 so that the support legs extend from, for example, the horizontal supports 610, 611, 613 (which are supported by vertical supports 612) (Fig. 11, Block 900). The support legs 620L1, 620L2 may be integrally formed with the storage rack structure in any suitable manner. For example, the support legs 620L1, 620L2 may have any suitable configuration and may be part of, for example, a substantially U-shaped channel 620 such that the support legs 620L1, 620L2 are connected to each other through channel portion 620B. The channel portion 620B may provide an attachment point between the channel 620 and one or more horizontal supports 610, 611, 613. It should be understood that each support leg 620L1, 620L2 may also be configured to individually mount to the horizontal supports 610, 611, 613.

As may be realized, Referring also to Fig. 7C, the support legs 620L1, 620L2 may be installed on the horizontal supports 610, 611, 613 with an installation jig 802. The installation jig 802 may include a body 800 having a first set of grooves 801 configured so that the support legs 620L1, 620L2, generally referred to as slats 620L, fit into the grooves for accurately locating the slats 620L on the horizontal supports 610, 611, 613 within a predetermined tolerance. The installation jig 802 may include a second groove 803, substantially orthogonal to the first set of grooves 801. The second groove may be configured to accept a vertical support 612 for locating the installation jig 802 relative to the storage rack structure. It should be understood that the installation jig 802 may be located relative to the storage rack structure in any suitable manner for installing the slats 620L. The slats 620L may be affixed to the storage structure in any suitable manner such as by, for example, snaps, fasteners, welds, chemical bonding agents and the like. It should be understood that the slats 620L may be installed on the storage rack structure in any suitable manner using any suitable alignment tools.

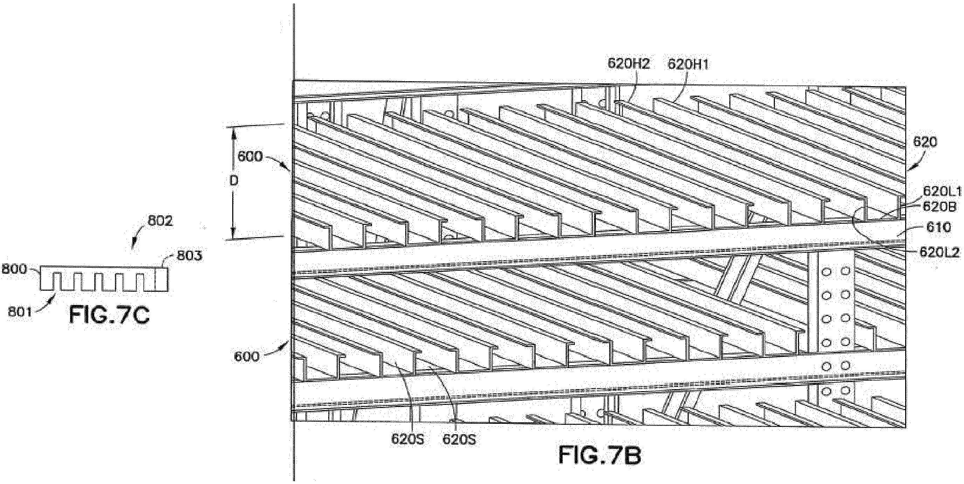

In the embodiments, each support leg 620L1, 620L2 includes a bent portion 620H1, 620H2 having a suitable surface area configured to support case units stored on the shelves 600. The bent portions 620H1, 620H2 may be configured to substantially prevent deformation of the case units stored on the shelves. It should be understood that the leg portions 620H1, 620H2 may have a suitable thickness or have any other suitable shape and/or configuration for supporting case units stored on the shelves. As can be seen in Figs. 7A and 7B, the slats 620L or channels 620 may form a slatted or corrugated shelf structure where spaces 620S between, for example, the support legs 620L1, 620L2 allow for arms or fingers 110F of the bots 110 to reach into the shelving for transferring case units to and from the shelves as well as allowing the bot 110 to track its position within the storage rack structure. The slats 620L may be mounted to the storage shelf 600 such that the distance 620S (e.g. space between slats) places the slats 620L at known increments 130A for bot position location during picking and placing case units to the storage shelves 600. In one example, the spacing 620S between the slats 620L can be arranged to provide an incremental bot positioning system (e.g. the spacing 620S is substantially the same between all of the slats 620L where the bot location is tracked from a base or reference point such as an end of the picking aisle 130A) . In another example, the spacing 620S between the support legs 620L1, 620L2 can be arranged to provide an absolute bot positioning system (e.g. the spacing 620S follows a predetermined pattern so that each space when detected by the bot provides a unique identifiable location of the bot within the picking aisle) while still allowing the fingers 110F of the bot 110 to be inserted between the slats 620L for picking and placing case units from the storage shelves 600. In the embodiments, substantially the same absolute encoder slat pattern may be used in each of the picking aisles while in other alternate embodiments each of the picking aisles may have a unique absolute encoder slat pattern so as to identify the aisle as well as the bot location within the aisle. It should be understood that in the embodiments, the spacing between the slats 620L on the shelves 600 may be any suitable spacing to provide any suitable measurement scale for determining the location of the bot such as, for example, a combination of incremental and absolute positioning scales. The position of the bot may also be determined using a "map" or "fingerprint" of the cases on the storage shelves as will be described in greater detail below. It is also noted that transfer of case units to and from the multilevel vertical conveyors 150A, 150B (whether the transfer is made directly or indirectly by the bot 110) may occur in a substantially similar manner to that described above with respect to storage shelves 600.

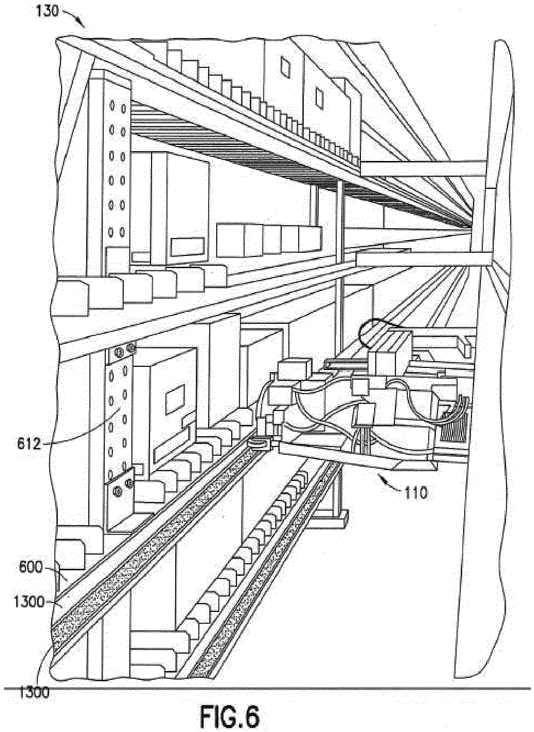

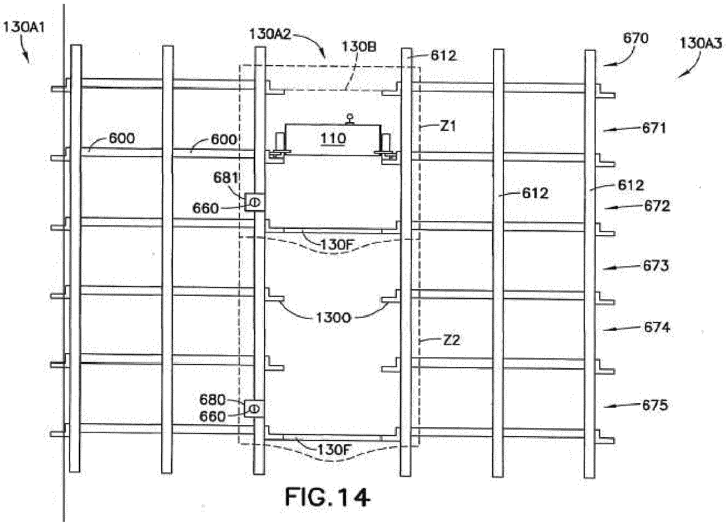

In the embodiments, as can be seen in, for example, Fig. 6 and also Fig. 14, tracks or rails 1300 may be fixed to one or more of the vertical and horizontal supports 612, 610, 611, 613 of the storage structure in any suitable manner such that the bot straddles adjacent tracks 1300 for traversing a picking aisle 130A. As can be seen in Figs. 6 and 14 one or more levels 670-675 of the picking aisles 130A may be substantially vertically unobstructed by floors 130F (e.g. one or more of the picking aisles do not have floors) as will be described in greater detail below. The absence of floors 130F on each picking level 670-675 may allow maintenance personnel to walk or otherwise travel down the picking aisles where the height between each storage level would otherwise substantially prevent the maintenance personnel from traversing the picking aisles 130A. In the embodiments, any suitable carts or dollies may be provided (in lieu of or in addition to the floors) where the carts or dollies straddle the adjacent tracks in a manner substantially similar to that described above with respect to the bots 110 or ride along the floors 130F so that the maintenance personnel may ride on the carts or dollies for traversing the picking aisles.

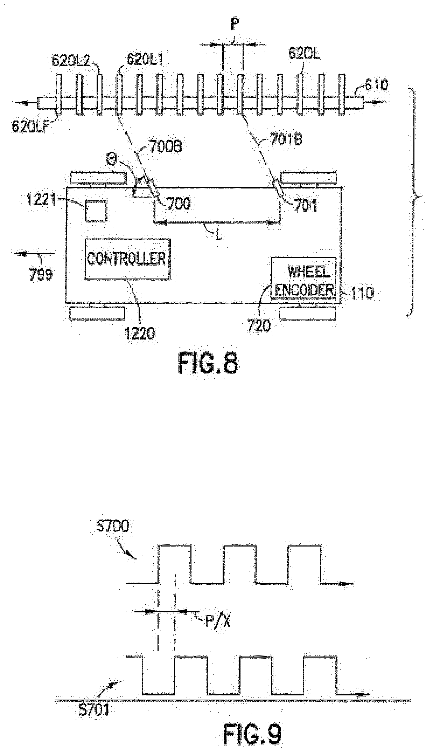

Referring now to Figs. 7A and 8, any suitable number of sensors for detecting or sensing the slats 620L may be provided on the bot 110 (Fig. 11, Block 910). In the embodiments the bot 110 includes two sensors 700, 701 for exemplary purposes only. In the embodiments the sensors 700, 701 are described as beam sensors including an emitter and a receiver. The emitter and receiver of each sensor 700, 701 may be housed in a unitary sensor casing or separate sensor casings of the respective sensor 700, 701. It should be understood that the sensors 700, 701 may be any suitable types of sensors including, but not limited to, beam sensors and proximity sensors such as magnetic sensors, capacitance sensors, inductance sensors and the like. The sensor 700 may be located towards the front of the bot 110 and the sensor 701 may be located towards the rear of the bot 110. It should be realized that the terms "front" and "rear" are relative terms and used herein for exemplary purposes only as the bot 110 may be configured to travel down the picking aisle 130A in any direction such that the front and rear of the bot, relative to the direction of bot travel, may be reversed. It should be understood that one or more sensors may be located at any suitable positions on the bot such as for example, along any suitable length of any suitable side of the bot 110. The sensors 700, 701 may be mounted to the bot 110 in any suitable manner such as to the chassis or any other portion of the bot 110 structure.

The sensors 700, 701 may be mounted to the bot 110 for detecting or otherwise sensing the slats 620L to provide, for example, an incremental (or absolute) and discrete position encoder (Fig. 11, Block 920) for determining a location of the bot within, for example, a picking aisle 130A or any other suitable location within the storage and retrieval system 100. The sensors 700, 701 may be mounted at any suitable angle θ (shown exaggerated in Figs. 8, 10 and 12) relative to, for example, the bot chassis and/or the face 620LF of the slats 620L for generating a signal when a respective slat 620L is sensed. It is noted that the angle θ may allow, for example, a beam emitted from the sensor to be reflected off of, for example, the slats 620L and be received by a receiver of the sensor as will be described below. As may be realized, the emitter of the beam sensor may be configured such that the emitter is angled relative to the sensor housing so that the housing can be mounted to the bot substantially parallel and/or perpendicular to one or more structural features of the bot. As may also be realized where the sensors used are proximity sensors, the sensors may not be angled as the slats are detected through, for exemplary purposes only, changes in capacitance, inductance or magnetic fields as will be described in greater detail below. It is noted that the sensors may have any suitable arrangement/configuration relative to the slats for detecting the slats and determining a position of the bot. As a non-limiting example only, the back surface of the shelf may have an anti-reflective property that allows the sensors to be placed so that the sensor beam of a reflective type sensor is substantially parallel to a longitudinal axis of the slats (e.g. not at an angle to the slats).

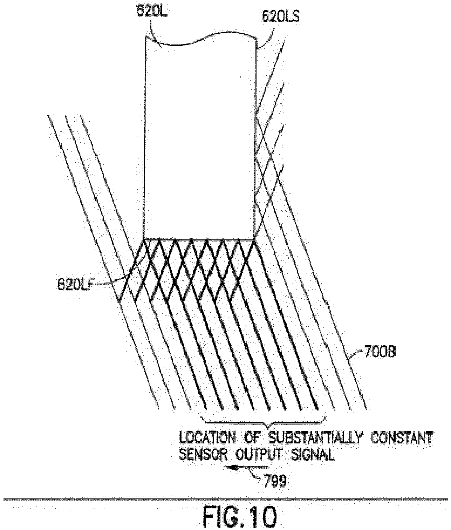

Referring also to Fig. 10, as the bot moves through the picking aisle 130A in, for example, the direction of arrow 799 the beam 700B emitted from the emitter of sensor 700 strikes the side 620LS of the slat 620 and is reflected away from the sensor (e.g. the beam is not returned to the receiver of the sensor 700). As the bot continues to move in the direction of arrow 799 the beam 700B strikes a face 620LF of the slat 620L such that the beam 700B is reflected back to the receiver of sensor 700 so that the sensor produces an output signal indicating the presence of the slat 620L. During the continual movement of the bot 110 in the direction of, for example, arrow 799 the beam 700B sweeps the face 620LF of the slat 620L such that the beam 700B continues to be reflected back to the receiver of sensor 700. As the receiver of sensor 700 receives the beam 700B the sensor 700 provides a substantially constant output signal to, for example, any suitable controller 1220 of the bot 110 (or storage and retrieval system 100 such as control server 120). As the bot continues to move in the direction of, for example, arrow 799 the beam 700B moves off of the slat face 620LF and is no longer reflected back to the receiver of the sensor 700 such that the sensor discontinues to output the substantially constant output signal to indicate no slat is present. As may be realized, as the bot moves past successive slats 620L the output signals (e.g. slat present, no slat present, slat present, etc.) generated by the sensor 700 may form of an "on/off" signal S700 as shown in Fig. 9 where the on/off output signals correspond to a pitch P (or spacing) of the slats (Fig. 11, Block 930). In this example, the signal S700 is illustrated as a square wave but may have any suitable waveform/shape. Sensor 701 may operate in the same manner as that described above with respect to sensor 700 such that the beam 701B from sensor 701 is reflected off the slat faces 620LF to produce another "on/off" signal S701. As may be realized, the "on/off" signal may be generated in a similar manner using proximity sensors where the signal is "on" when the slat is in proximity to the sensor (e.g. slat presence is detected) and "off" when there is no slat presence detected.

The two signals S700, S701 generated by the respective sensors 700, 701 form, for example, incremental encoder patterns (e.g. substantially equal pitch between slats) that may be interpreted by the controller 1220 for determining a position of the bot within, for example, the picking aisle 130A. It is noted that the pitch between slats may vary in a unique manner (while still allowing enough room for fingers 110F of the bot 110 to be inserted between the slats for picking and placing case units from the storage shelves 600) to provide an absolute encoder pattern that can be interpreted by the controller 1220 for determining the location of the bot independent of previously detected slats of the picking aisle 130A.

It is noted that the accuracy or resolution of the sensors 700, 701 may be increased by, for example, placing the sensors 700, 701 on the bot 110 such that the distance between sensors or the angle of the different sensors results in at least one of the sensors being offset from the slat pitch P by a predetermined fractional amount to effectively increase a number of slats detected by the bot for creating a finer resolution. For example, the distance L between sensors can be as follows:

$$L = mP + w,$$

where m is an integer and w is a predetermined fraction of the pitch P (e.g. P/2, P/4, ... P/x). It is noted that the location of the slats 620L within the storage shelves 600 may be located in a predetermined configuration relative to, for example, the vertical supports 612 of the storage structure. In one example, the vertical supports 612 may not be slatted and the higher position resolution may assist in confirming the hot location so that, for example, fingers 110F (Fig. 7A) of the bot 110 do not contact the vertical supports 612 or support slats 612L while picking/placing case units from the storage shelves 600. In another example, the vertical supports 612 may have false slats disposed thereon in a manner substantially similar to that described below with respect to the transfer areas 295 of the storage and retrieval system. In still other examples, the bot position can be determined using RFID tags or barcode labels mounted throughout the storage and retrieval structure. In this example the bot 110 may include any suitable RFID or barcode reader so that the RFID tags and/or barcodes can be read as the bot 110 travels throughout the storage and retrieval system. In still other examples the location of the bot can be determined based on odometry information and feedback from the bot drive motors and their interaction with the surface the bot rides on or against as will be described below. It should be understood that any suitable combination of the above features can be used to determine the location of the bot.

The controller 1220 of the bot 110 may have access to a storage and retrieval system structure file. The structure file may include the location of each structural feature of the storage and retrieval system including the positions for each slat 620L within their respective picking aisles 130A. The structure file may be located in any suitable memory accessible by the controller 1220. In one example, the structure file may be resident in a memory 1221 of the bot 110. In other examples, the structure file may be resident in a memory of, for example, the control server 120 and accessed by the bot 110 or uploaded to a bot memory when the location of the bot 110 is being determined. The slat locations specified by the structure file may assist in qualifying the location of the slats for determining the position of the bot 110 within, for example, a picking aisle 130A. For example, when the bot qualifies a slat such as slat 620L1 of the storage shelves 600 with one of the sensors 700, 701 the controller 1220 of the bot compares an estimated location of the bot 110 using bot odometry (obtained from e.g. wheel encoders 720 as described below, which accounts for changes in diameter of the wheels due to, e.g. wear) at the instant in time when the slat 620L1 is detected with the location of the slat 620L1 as specified by the information in the structure file (Fig. 11, Blocks 940 and 950). If the comparison between the estimated bot location and the location of the slat from the structure file coincide within a predetermined tolerance the location of the bot (and the sensor sensing the slat) is qualified with the slat such that the bot 110 knows its substantially exact location within the picking aisle 130A. It is noted that the sensors 700, 701 may be located at a predetermined distance relative to, for example, a location of an effector or arm 110A (Fig. 12) of the bot 110 so that the arm 110A can be positioned, based on the sensor's determined location relative to the storage slats 620L, for inserting fingers 110F of the arm 110A between the slats for transferring containers between the bot 110 and the storage shelves 600. It is also noted that the controller 1220 may be configured to determine a state (acceleration, speed, direction, etc.) of the bot 110 as well as account for wheel slippage when determining the position of the bot within the storage and retrieval system as described in, for example, United States Provisional Patent Application entitled "BOT HAVING HIGH SPEED STABILITY" with Attorney Docket Number 1127P014266-US (-#1) (Ser. No. 61/423,359) and filed on December 15, 2010 (now US Pat. App. NO. 13/326,447 with Attorney Docket Number 1127P014266-US (PAR) filed on December 15, 2011), the disclosures of which are incorporated by reference herein in their entireties.

In the area between slats 620L1, 620L2 the bot 110 may be configured to obtain odometry information from wheel encoders 720 of the bot 110 to substantially continuously update an estimated position of the bot 110 (e.g. by adding the distance traveled by the bot as determined from the rotation of one or more of the bot's wheels to the bots last qualified position or any other suitable previously determined position of the bot). The estimated position of the bot 110 may be based off of, for example, the position of the last slat 620L1 detected and qualified (e.g. the location is verified through comparison with the structure file) by the bot 110 (Fig. 11, Block 960). For example, when the bot 100 encounters a subsequent slat 620L2 in the direction of travel 799 through the picking aisle 130A the bot 110 calculates its estimated position using the verified position of the previously detected slat 620L1 and the information from the wheel encoders 720. The bot 110 compares this estimated position against the slat position information contained in the structure file for slat 620L2 and if the two locations (i.e. the bots estimated position and the position of the slat 620L2 obtained from the structure file) coincide within the predetermined tolerance then the bot 110 knows substantially exactly where it is located within the picking aisle 130A and the bot's position within the picking aisle 130A is updated by, for example, the bot controller 1220. If the estimated location of the bot 110 (when the sensor senses the subsequent slat 620L2) is confirmed using the information in the structure file then the slat/bot location is qualified. If there is no match or confirmation then the signal output from one or more of the sensors 700, 701 is ignored and the substantially exact position of the bot is not updated, rather the controller 1220 of the bot continues to use the estimated position obtained from the wheel encoders 720 until the location of a subsequently sensed slat is confirmed/qualified. It is noted that in the embodiments, the bot odometry may be reset each time a slat position is qualified. The resetting of the bot odometry may substantially eliminate any built up tolerance or other cumulative tracking errors generated by, for example, the wheel encoders 720. Alternatively, the bot odometry may not be reset when each slat is qualified such that the bot controller or any other suitable controller of the storage and retrieval system may be configured to account for any tolerance or cumulative tracking errors in the wheel encoders 720 when qualifying the locations of the slats and determining a position of the bot.

Referring to Figs. 2 and 12 a similar bot location system, such as that described above with respect to the location of the bot in the picking aisle 130A may be used for determining the location of the bot 110 relative to holding locations A, B on shelves of the multilevel vertical conveyors 150A, 150B. As can be seen in Fig. 12 each shelf 1000 of the multilevel vertical conveyors 150A, 150B may be configured to hold multiple case units. In this example, two case units 1001, 1002 are held on the conveyor shelf 1000 in holding areas A, B having a side by side arrangement. The conveyor shelf 1000 is connected to a drive system so as to rotate around a predetermined path so that the shelf 1000 passes by the different levels of the storage and retrieval system for delivering case units to the different levels as described in, for example, United States Patent Application Number 12/757,354, entitled "LIFT INTERFACE FOR STORAGE AND RETRIEVAL SYSTEMS," and United States Patent Application Number 12/757,220, entitled "STORAGE AND RETRIEVAL SYSTEM" (both previously incorporated herein by reference).

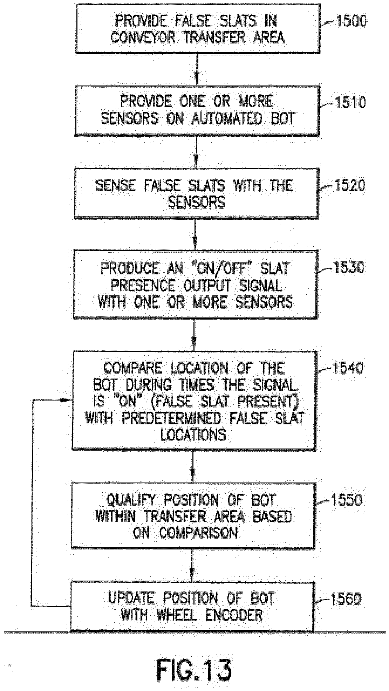

The storage and retrieval system is configured so that the bot can travel into a transfer area 295 for transferring case units between the bot 110 and a holding area A, B of the conveyor shelf 1000. The transfer area 295 may have a wall 1100 or other suitable structure or surface configured to support, for example, any suitable number of false slats 1620 (Fig. 13, Block 1500). The wall 1100 may be located between the bot 110 and the conveyor shelf 1000 as the bot travels in the transfer area 295. In the embodiments, the false slats 1620 may be substantially similar to slats 620L but are merely mounted to the wall 1100 (rather than extend the depth of a storage shelf) and are not configured to hold or otherwise support case units. The false slats 1620 may be of any sufficient length (e.g. extend from the surface of the wall) to allow one or more sensors 700, 701 of the bot 110 (Fig. 13, Block 1510) to detect the false slats 1620. It should be understood that the false slats may have any suitable configuration for, in the case of beam sensors 700, 701, reflecting the sensor beams 700B, 710B back to the sensors for locating the bot 110 relative to the holding locations A, B of the conveyor shelf 1000 in a manner substantially similar to that described above. Where, for example, proximity sensors are used the false slats may have any suitable configuration for interacting with the proximity sensors. It should also be understood that the false slats 1620 may have any suitable configuration for interacting with any suitable sensors of the bot 110 for causing the sensors to output the "on/off" signal(s) described above.

While the false slats are illustrated in Fig. 12 as protruding from the wall 100, the false slats 1620 may be substantially flat surfaces configured to interact with the sensors 700, 701 in the manner described herein. For example the wall or structure 1100 may have an anti-reflective surface on which reflective objects are mounted. The reflective objects may be used in a manner substantially similar to that of the false slats 1620 for interacting with the sensors 700, 701 and generating the on/off sensor signals S700, S701.

In operation, the bot 110 may receive instructions from, for example, the control server 120 to transfer a case unit, such as case unit 1001, 1002, to or from the conveyor shelf 1000. The instructions may indicate which holding area A, B of the conveyor shelf 1000 the case unit is located. The bot 110 may travel into a transfer area 295 corresponding to the conveyor shelf 1000 from/to which the bot 110 is to transfer a case unit. During travel in the transfer area 295, one or more sensors 700, 701 of the bot 110 may sense or otherwise detect the false slats 1620 in the manner described above with respect to slats 620L (Fig. 13, Block 1520). As each slat is detected an "on/off" signal, similar to signals S700, S701 described above may be generated through sensor output (Fig. 13, Block 1530) . The bot 110 may compare the location of the bot at the times the false slats 1620 are detected with, for example, predetermined false slat locations within the storage and retrieval system structure file (Fig. 13, Block 1540). The position of each of the false slats 1620 may be correlated to a respective holding position A, B of the conveyor shelf 1000 such that if the false slat position detected by the bot and the predetermined position match within a predetermined tolerance the bot knows substantially exactly where it is located within the transfer area 295 relative to the holding areas A, B of the conveyor shelf 1000 (Fig. 13, Block 1550). It is noted that the locations of the false slats 1620 correspond to the location of the fingers 1000F of the conveyor shelf 1000 so that the fingers 110F of the bot arm 110A can be aligned between the false slots 1620 for extending between the fingers 1000F without contact for picking/placing case units to the conveyor shelf 1000.

In a manner substantially similar to that described above, if the false slat 1620 position detected by the bot 110 and the predetermined position of the false slats, as specified in the structure file, do not match within the predetermined tolerance the sensor signal corresponding to the detected false slat may be ignored. Where the number of false slats or the length of the transfer area 295 does not allow for the bot 110 to travel to another false slat for determining its position within the transfer area 295, the bot may change its travel direction so that the false slats 1620 can be re-detected by the bot 110. There may be a "starting false slat" that provides the bot 110 with an absolute position location within the storage structure. The starting false slat may be located at a predetermined position within the transfer area 295 such as at a beginning or entrance of the transfer area 295. If the bot's 110 position cannot be determined within the transfer area via the false slat detection, the bot may travel to the location of the "starting false slat" and re-detect the false slats 1620 in the manner described herein. The bot 110 may also obtain information from the wheel encoder(s) 720 for continually updating an estimate of its position in a manner similar to that described above (Fig. 13, Block 1560) when, for example, the bot sensors are located between the false slats or if the position of the bot 110 cannot otherwise be determined from the false slats 1620.

In a manner similar to that described above, the false slats 1620 may be arranged to form an incremental or absolute encoding system for determining the location of the bot 110 relative to the holding areas A, B of the conveyor shelf so that the fingers 110F of the bot 110 can be aligned with a case unit, which in this example is case unit 1002, on the conveyor shelf 1000. It is noted that, in one example, the false slats 1620 may extend the length of the transfer area 295 while in other examples the false slats 1620 may be located only at the multilevel vertical conveyor access location (e.g. where the bot 110 stops to access the conveyor shelf 1000) of the transfer area 295. It is noted that lines may be affixed or otherwise disposed on decks or other suitable locations, such as the walls, of the transfer area 295 and/or multilevel vertical conveyor access location. These lines may be disposed transverse to the direction of bot travel at predetermined locations so that sensors on the bot 110 can detect the lines as the bot travels through the transfer area 295 and/or multilevel vertical conveyor access location for determining a position of the bot within the storage and retrieval system. It should be realized that the line or lines may alternatively be placed on the bottom or sides of the bot and sensors may be located on the deck or walls of the storage and retrieval system so that the sensor can detect the lines on the bot as the bot passes by the sensor for determining a location of the bot.

Referring again to Fig. 7A in the embodiments the bot 110 may also include one or more suitable case sensors 703, 704 configured for sensing case units 101 stored on the shelves 600. Some non-limiting examples, of case unit sensors can be found in, for example, United States Patent Application Number 12/757,312, previously incorporated by reference herein. In one example, the case sensors 703, 704 may include one or more of a laser sensor and ultrasonic sensor. In another example, the case sensors 703, 704 may be substantially similar to sensors 700, 701 described above. The case sensors 703, 704 may be configured to allow the bot 110 to sense each case unit 101 as the bot travels along a picking aisle. The case sensors 703, 704 may be connected to any suitable controller such as, for example, control server 120 and/or bot controller 1220 such that patterns or sequences of case units 101 may be recognized for assisting in a location determination of the bot 110. For example, the control server 120 may include a "map" or "fingerprint" of case units (including their respective sizes, positions, spacing between the case units, etc.) for each picking aisle. As the bot 110 travels through the picking aisle the controller, such as control server 120 (or bot controller 1220) may receive and interpret signals from the case sensors 703, 704 indicating, for example, the sizes and relative positions of the case units 101 the bot is passing. The control server 120, for example, may compare these signals with the case unit map/fingerprint for determining, for example, which aisle the bot is in and which portion of the aisle the bot is in (e.g. the location of the bot within the aisle). In one example, as the bot 110 turns down a picking aisle the case units 101 may be sensed and the control server 120 may determine if the bot 110 is in the correct aisle based on the sensed case units. It is noted that the fingerprint of cases may be dynamic as cases are added and removed from the shelves 600.

As can be seen in Fig. 14, for exemplary purposes only, an end view of several picking aisles 130A1-130A3 each having multiple levels 670-675 is shown (e.g. looking down the aisles towards the transfer deck). In this example, levels 672 and 675 include aisle floors 130F for providing maintenance access to one or more levels of the picking aisle 130A2. The aisle floor 130F on level 675 may provide access to, for example, storage levels 673-675 (e.g. maintenance access zone Z1) and the aisle floor 130F on level 672 may provide access to, for example, storage levels 670-672 (e.g. maintenance access zone Z2). It should be understood that the levels on which the aisle floors 130F are located are exemplary only and that in alternate embodiments any suitable number of floors may be provided at any number of storage levels for providing maintenance access within the picking aisles. It should also be understood that the storage levels 670-675 may be grouped together or not grouped together in any suitable manner for forming one or more maintenance access zones.

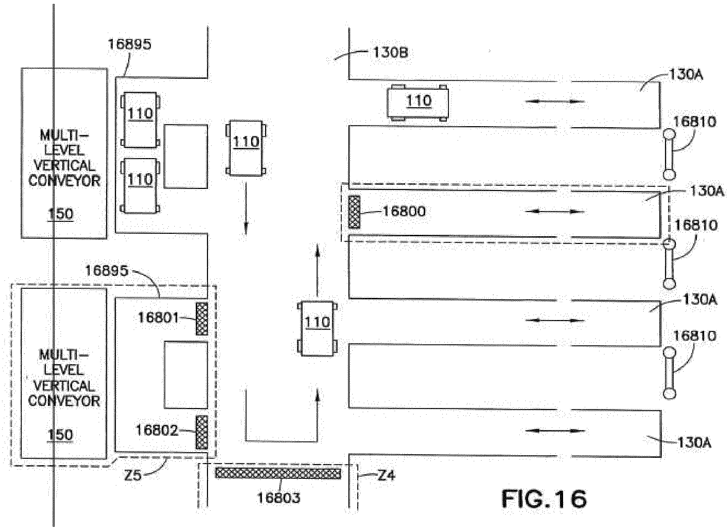

Access to each level 672, 675 having an aisle floor 130F may be provided in any suitable manner using any suitable access device 16810 (Fig. 16) of a corresponding maintenance access gateway (210B, Fig. 3 and 310B, Fig 4). In one example where the storage structure is a single-ended structure the access device 16810 may be one or more platforms, ladders, elevators or other lifting devices located at an end of a respective aisle at for example, maintenance access gateway 210B. In another example where the storage structure is a double-ended structure, in addition to or in lieu of having access located at the ends of the structure as described above with respect to the single-ended structure, the access device 16810 may be located between transfer decks 130B adjacent a respective aisle at for example, maintenance access gateway 310B or at any other suitable location of the storage and retrieval system. The access device 16810 of the maintenance access gateway 210B, 310B may be a rack or platform structure extending, for example, the entire width W (e.g. transverse to a length of the picking aisles) or a portion of the width W of the storage structure where the rack structure includes, for example, a floor corresponding to each of the aisle floors 130F and one or more flights of stairs, ladders, or other structure allowing maintenance personnel to traverse between the floors of the rack structure. It is noted that in the embodiments any suitable device or structure may be used to provide maintenance personnel access to the aisle floors 130F.

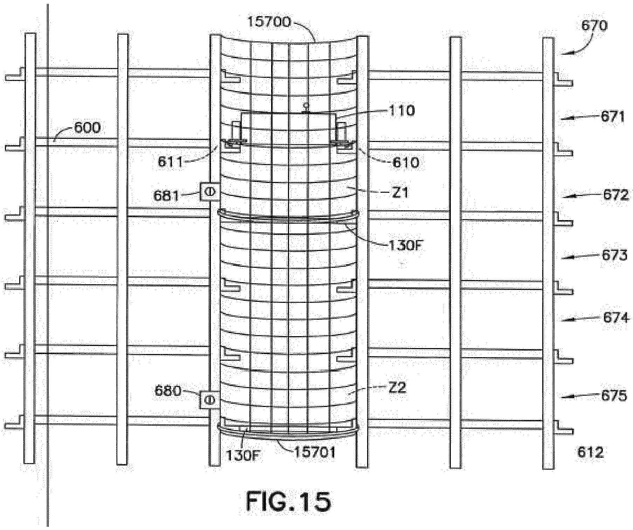

Referring to Fig. 15 one or more suitable barriers 15700, 15701 may be provided at, for example, the end of the picking aisle 130 opposite the transfer deck (where the storage structure is a single-ended structure) and/or substantially within or adjacent the maintenance access gateway 310B (where the storage structure is a double-ended structure) to substantially prevent, for example, a bot 110 from exiting a picking aisle and entering, for example, the maintenance access gateway (210B, 310B, Figs. 3 and 4). As may be realized, the barriers placed at the ends of the picking aisles (e.g. opposite the transfer deck) in, for example, the single-ended picking structure may also substantially prevent moving bots 110 from exiting the picking aisles during operation of the storage and retrieval system 100 regardless of whether or not there is a maintenance access gateway located at the end of the picking aisle. As may be realized, the barriers in maintenance access gateway 310B of the double-ended picking structure may be removed from, for example, at least the picking aisles 130A that are not locked out to allow bots 110 full access to the both sides A, B of the picking aisles 130A when the storage and retrieval system is operational for storing and retrieving cases.

The one or more barriers 15700, 15701 may be in the form of one or more nets but the barriers may also be in the form of bars (substantially similar to those described below), screens (substantially similar to the nets but having a more substantially rigid framed structure), or any other suitable barrier for substantially preventing the passage of bots 110 through the barrier. In one example, a barrier 15700, 15701 may be provided for each group of storage levels 670-675 served by a respective aisle floor 130F. For example, a barrier 15700 may be provided for maintenance access zone Z1 and barrier 15701 may be provided for maintenance access zone Z2. The barriers 15700, 15701 may be removably or movably attached to, for example, one or more of the vertical or horizontal members 610-612 of the storage structure so that the barrier may be at least partially removed or opened to allow maintenance personnel to enter, for example, the picking aisle 130A2. For example, where the barrier 15700, 15701 is in the form of a net, the net may be fastened to the vertical and/or horizontal members 610-612 using clips, or other removable fasteners so that at least a portion of the net may be moved away from the storage structure allowing access into the picking aisle 130A2. Where the barrier 15700, 15701 is in the form of bars or screens a hinged or other moveable connection may be used so that the bars or screens function substantially as doors or gates to allow access into the picking aisles 130A. The barriers 15700, 15701 may be configured to allow access into the picking aisles in any suitable manner.

It is noted that where the barriers 15700, 15701 are used in a double-ended storage structure, such as within maintenance access gateway 310B (Fig. 4) the barriers 15700, 15701 may be provided for one or more levels of picking aisles only when those picking aisles are locked out (e.g. the barrier is not present during operation of the associated picking aisle levels when those picking aisle levels are operational for storing and retrieving cases). In one example, referring briefly to Fig. 4, if maintenance personnel were accessing picking aisle 130A4 from the left of the storage and retrieval system 300 through maintenance access gateway 310B the movable barriers may be automatically positioned, e.g. upon a locking out of the desired level(s) of picking aisle 130A4, to block one or more sides of the maintenance access gateway for the desired storage level(s) (e.g. a barrier would be placed in any picking aisle 130A1-130A4 through which the maintenance personnel would travel to reach the locked out aisle). The maintenance access gateway 310B may be configured in any suitable manner to provide access to any desired storage levels of any desired aisle without blocking other picking aisles. The barriers may also be moved into position to block the desired levels of one or more picking aisles in any suitable manner.

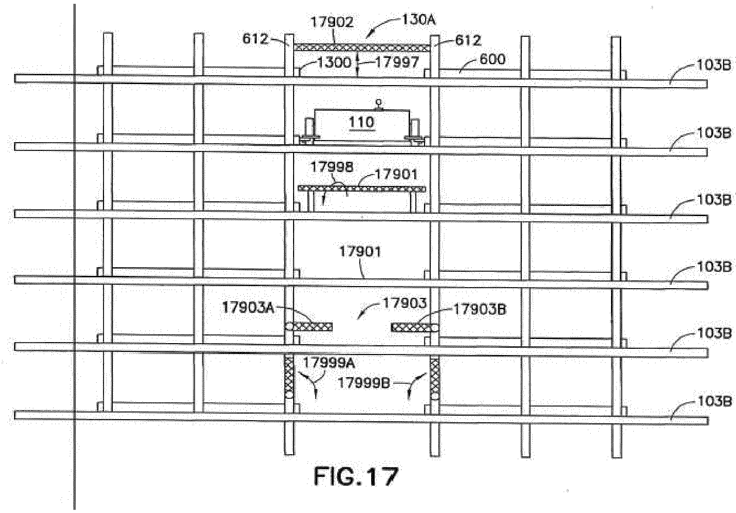

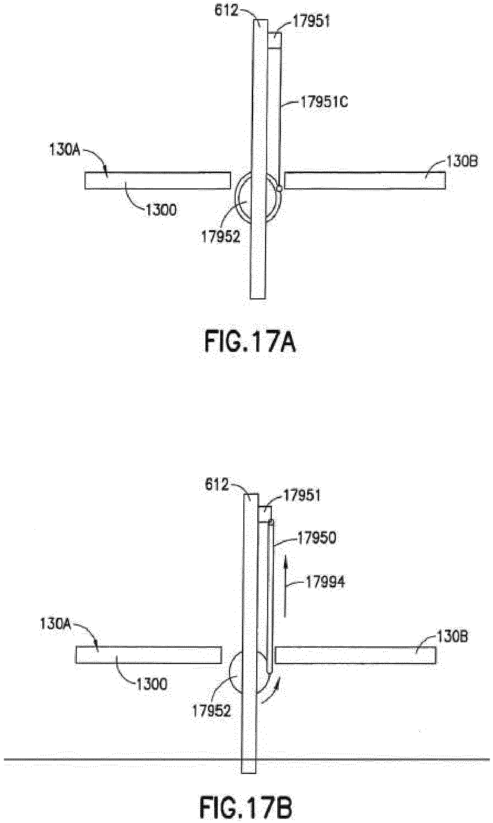

Referring to Figs. 16 and 17, examples of barriers that may be used, for example, in any suitable areas of the storage and retrieval system 100 that are, for example, substantially inaccessible to maintenance personnel when the system is operational are shown. These barriers may be actuated for blocking a bot pathway within the storage and retrieval system 100 when for example, a predetermined maintenance access zone is locked out and before maintenance personnel enter the locked out maintenance access zone (e.g. to substantially prevent bots 110 from entering the locked out maintenance access zone. The barriers may also be configured to allow maintenance personnel to actuate or otherwise put in place the barriers when the maintenance personnel are located within the maintenance access zone. In Fig. 16 one storage level of, for example, the storage and retrieval system 100 is shown but it should be understood that one or more levels of the storage and retrieval system may include barriers substantially similar to those described herein. Barriers 16800-16803 may be placed at any suitable location within the storage and retrieval system 100 and those barriers 16800-16803 shown in Fig. 16 are shown in exemplary locations only. It should be realized that the entrance/exit to each picking aisle 130A and each transfer area 16895 may have a barrier located thereat. It should also be realized that while only one barrier 16803 is shown on the transfer deck 130B, other barriers may be located on the transfer deck for separating the transfer deck 130B into any suitable number of maintenance access zones. For exemplary purposes only maintenance access zone Z3 is shown as including picking aisle 130A and as described above may extend above or below the storage level shown in Fig. 16 to include additional storage levels in a manner substantially similar to that shown in Fig. 14 with respect to maintenance access zones Z1 and Z2. Maintenance access zone Z5 is shown as including a transfer area 16895 for a multilevel vertical conveyor 150. It is noted that with respect to the multilevel vertical conveyors 150 the maintenance access zone Z5 may extend to all of the transfer areas (e.g. vertical stack of transfer areas) associated with a particular multilevel vertical conveyor 150 being locked out so that the multilevel vertical conveyor 150 is inoperable or turned off when maintenance personnel are located in the transfer area 16895 corresponding to the multilevel vertical conveyor 150. Maintenance access zone Z4 is shown as including a portion of the transfer deck 130B. In a manner similar to that described above with respect to Fig. 4, the maintenance access zones Z4 on the transfer deck 130B may be arranged so that at least a portion of the transfer deck 130B remains operational (e.g. for storing and retrieving cases) for allowing bots 110 to traverse the deck for accessing picking aisles 130A and transfer areas 16895 associated with the operational portion of the transfer deck 130B.

The barriers 16800-16803 may be any suitable barriers configured to substantially prevent the passage of, for example, a bot 110 through (including passage above or below) the barrier. It is noted that while some exemplary barriers 17901, 17902, 17903, 17950 are described with respect to picking aisle 130A it should be understood that substantially similar barriers may also be located on the transfer deck 130B (see barrier 16803) and at the entrance/exit of the transfer areas 16895 (see barriers 16801, 16802).

In the embodiments the barrier 17902 may be a substantially bar or gate like barrier that linearly raises and lowers for blocking, for example, an entrance/exit of for example, a storage level of picking aisle 130A. The barrier 17902 may be raised or lowered in the direction of arrow 17997 in any suitable manner and may be movably mounted in any suitable manner to, for example, vertical supports 612 of the storage and retrieval system 100. As may be realized when the barrier 17902 is retracted it may be lowered below a surface of the transfer deck 130B and/or tracks 1300 on which the bot 110 travels.

In the embodiments the barrier 17901 may be a pivotable barrier. The barrier 17901 may be substantially similar to barrier 17902 but instead of being substantially linearly raised and lowered. The barrier 17901 may be pivotally raised from a substantially horizontal orientation to a substantially vertical orientation in the direction of, for example, arrow 17998. In this example, when the barrier is in a horizontal orientation the barrier is located partially within the transfer deck and may be substantially flush with or below a surface of the transfer deck 130B and/or picking aisle 130A on which the bot 110 travels. The barrier 17901 may also be offset from the transfer deck 130B so that when in the horizontal orientation the barrier is located substantially entirely within the picking aisle. In one example, the direction in which the barrier 17901 pivots may be such that if a bot 110 impacts the barrier 17901 when trying to enter the picking aisle 130A, the barrier substantially cannot be pivoted to the horizontal position by the bot 110. The barrier 17901 may also pivot in any suitable direction.

In the embodiments the barrier 17903 may be in the form of one or more vertically pivotal barriers 17903A, 17903B. In this example the barrier 17903 is shown as having two opposingly pivotable members 17903A, 17903B the barrier 17903 may also have more or less than two vertically pivotable members. The one or more pivotable members may also be horizontally pivotable rather than vertically pivotable in a manner substantially similar to a door or gate. Each pivotable member 17903A, 17903B may be pivotally mounted in any suitable manner to a respective vertical support 612 of the storage and retrieval system and be drivingly pivoted in the direction of arrow 17999A, 17999B in any suitable manner between the open (e.g. bots are able to pass) and closed (bots are not able to pass) positions.

Referring also to Figs. 17A and 17B, where screens, nets or other suitable flexible barriers are used, the barrier 17950 may be rolled up around, for example, one or more drums 17952 (or other suitable member capable of holding the barrier) and connected to one or more drive units 17951 through a connecting member 17951C. In one example the one or more drums 652 may be located substantially beneath the surfaces of the tracks or rails 1300 and the transfer deck 130B on which the bot 110 travels (e.g. on a storage level having a floor 130F, Figs. 14 and 15) and the one or more drive units 17951 may be located towards a top of a respective maintenance access zone (see e.g. zones Z1, Z2 in Fig. 14). In other examples the one or more drums 652 may be located substantially beneath the surfaces of the tracks 1300 and the transfer deck 130B on which the bot 110 travels for each of the storage levels and the one or more drive units 17951 may be located towards a top of each respective storage level. It is noted that the locations of the one or more drive units 17951 and the one or more drums 17952 may be reversed. The one or more drive units 17951 may operate to retract the connecting member 17951C in the direction of arrow 17994. The connecting member may be attached in any suitable manner to the barrier 17950 so that as the connecting member 17951C is retracted the barrier 17950 is unrolled from the drum 17952 to so that the barrier spans substantially from the bot travel surfaces of a respective storage level (or of a storage level having a floor 130F) to substantially a top of a respective storage level (or substantially a top of a respective maintenance access zone) in a manner substantially similar to that shown in Fig. 15.

It should be understood that the barriers described herein are exemplary only and in alternate embodiments the barriers may be any suitable barriers that operate in any suitable manner. It should also be realized that the types of barrier used in the storage and retrieval system do not have to be uniform and that different types of barriers may be used in different areas of the storage and retrieval system.

Referring again to Figs. 14 and 16, each maintenance access zone Z1-Z5 may have a control unit 680, 681. The control unit 680, 681 may be in communication with, for example, control server 120 (Fig. 1) in any suitable manner such as through a wired or wireless communication network. It should be understood that while only two control units 680, 681 are shown with respect to maintenance access zones Z1, Z2 the other maintenance access zones may include substantially similar control units. It should also be understood that while the control units 680, 681 are shown as being located at an entrance to the maintenance access zone (e.g. in Fig. 14 the entrance may be at the end of the picking aisles) the control units may be centrally located. Each control unit may include a switch 660. The switch may be configured such that once activated by a maintenance person a part of the switch (or other feature of the control unit) is removed from the control unit 680, 681 to substantially prevent deactivation of the switch by other maintenance personnel (e.g. the switch cannot be deactivated without replacing the removed part of the switch/control unit). In other examples the switch may include a "lock out" feature through which a locking device may be inserted through the switch and a fixed portion of, for example, the control unit housing so prevent deactivation of the switch (e.g. to deactivate the switch the locking device has to be removed). It should be understood that the switch may have any suitable configuration.

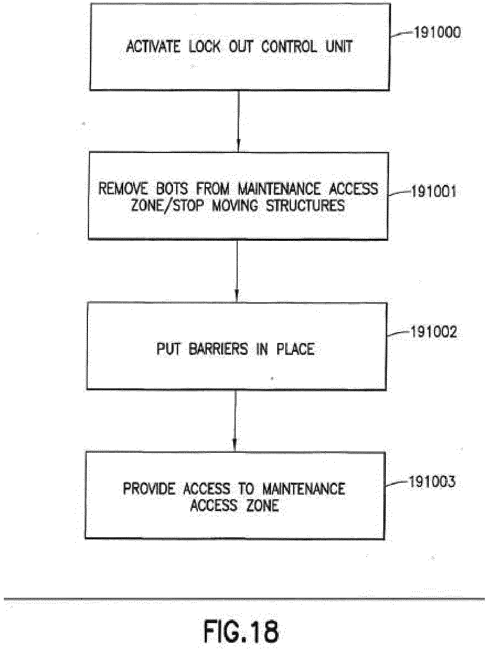

Referring to Figs. 14, 16 and 18 in operation a maintenance person activates the switch 660 of a desired maintenance access zone Z1-Z5 (Fig. 18, Block 191000). Upon activation of the switch 660 a communication signal is sent from the respective control unit 680, 681 to, for example, the control server 120 (Fig. 1). The control server 120 may send instructions to any bots 110 located within the desired maintenance access zone Z1-Z5 to exit or otherwise leave the desired maintenance access zone. If an operational bot 110 is not able to leave the desired maintenance access zone (e.g. due to a malfunction of the bot, a blockage in the picking aisle, etc.) the control server 120 may effect the shutting down of the bot 110. In addition to or in lieu of instructing the operational bots 110 to leave the desired maintenance access zone the control server may effect a shutting down of the bots 110 within the maintenance access zone (e.g. bots that are carrying cases may leave the zone while bots that are not carrying cases may shut down). If the desired maintenance access zone also includes moving components of the storage and retrieval system, such as for example, the multilevel vertical conveyors 150, the control server 120 may also send instructions to the multilevel vertical conveyor(s) within the desired maintenance access zone Z1-Z5 for stopping or otherwise shutting down the multilevel vertical conveyor(s). (Fig. 18, Block 191001). The control server 120 may effect the placement of the barriers 16800-16803 associated with the desired maintenance access zone Z1-Z5 in any suitable manner (Fig. 18, Block 191002). For example, the control server 120 may effect activation of any suitable drive units for rotating, pivoting, unrolling, etc. the barriers 16800-16803 (e.g. as described above with respect to Figs. 17-17B) so that the activated barriers substantially block the entrance/exit of the desired maintenance access zone Z1-Z5 to substantially prevent bots 110 from entering the desired maintenance access zone Z1-Z5. The barriers, such as nets 15700, 15701 (Fig. 15) located between the maintenance access gateways 210A, 210B, 310A, 310B, 310C (Figs. 3 and 4) which provide access to the maintenance access zones Z1-Z5 may be removed or otherwise opened to allow maintenance personnel to enter the desired maintenance access zone Z1-Z5 (Fig. 18, Block 191003). In the embodiments the opening of the barriers 15700, 15701 for allowing maintenance personnel to enter the maintenance access zone may be performed by the maintenance personnel and/or the barriers 15700, 15701 may be automated (in a manner substantially similar to that described above with respect to Figs. 17-17B) such that the barriers 15700, 15701 are opened substantially after the barrier(s) 16800-16803 are in place for substantially preventing bots from entering the maintenance access zone. It should be understood that the barriers may be opened or removed to allow access into or from a respective maintenance access zone in any suitable manner.

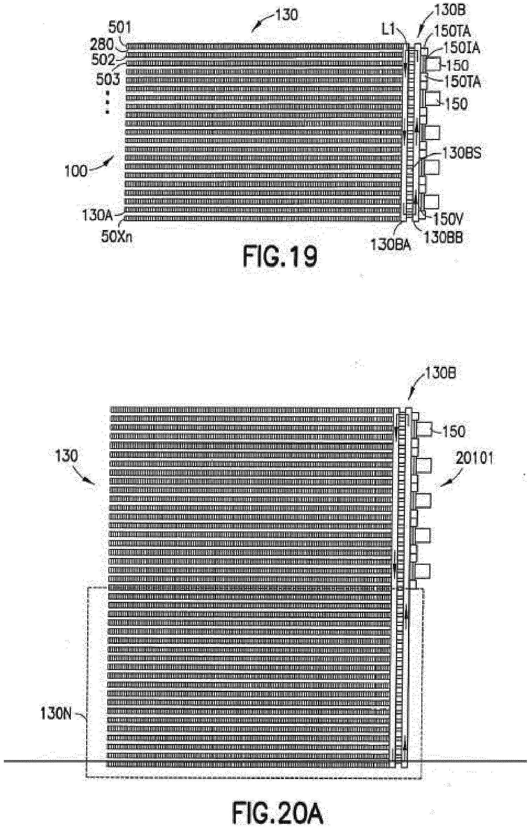

Referring to Fig. 19, the storage modules 501, 502, 503, ..., 50Xn may be arranged on one side of the transfer decks 130B while the multilevel vertical conveyors 150 are arranged on the other side of the transfer decks 130B. In the embodiments the transfer decks 130B may include a stacked or vertical array of, for example, substantially looped decks, where each level of the storage structure 130 includes one or more respective transfer decks 130. In the embodiments the transfer decks may have any suitable shape and configuration. In one example, each of the transfer decks 130B may form a unidirectional travel loop L1 where the bots travel in, for example, a clockwise or counter-clockwise direction (i.e. the bots 110 travel in a single predetermined direction around the transfer deck 130B) configured to connect all of the storage aisles 130A on a respective level to corresponding multilevel vertical conveyors 150 on the respective level. In the embodiments, the transfer decks may be bidirectional for allowing the bots to travel in substantially opposite directions around the transfer decks 130B. Suitable examples of transfer decks 130B that may be used with the embodiments described herein can be found in, for example, United States Patent Application number 12/757,312 entitled "Autonomous Transports for Storage and Retrieval Systems" previously incorporated by reference herein in its entirety. It is noted that while five multilevel vertical conveyors 150 are shown in Fig. 19 for exemplary purposes only, in the embodiments the storage and retrieval system may have more or less than four multilevel vertical conveyors.

The transfer deck 130B may have, for example, main travel lanes 130BA, 130BB connected by any suitable number of shunts 130BS. The shunts 130BS may be configured to allow the bots 110 to transition between the main travel lanes 130BA, 130BB at any suitable predetermined intervals along the main travel lanes 130BA, 130BB such that the bots 110 do not have to traverse an entirety of the travel loop L1 for accessing the storage aisles 130A. In the embodiments, the shunts 130BS may be substantially aligned with the storage aisles 130A along the length of the transfer deck 130B, however in the embodiments the shunts may have any suitable spatial relationship relative to the storage aisles.

The travel lanes 130BA, 130BB of the transfer decks 130B may be wider than the travel lanes within the aisles 130A of the storage structure 130. For exemplary purposes only, travel lanes of the transfer decks 130B may be configured to allow the bots 110 to make different types of turns (as described in United States Patent Application number 12/757,312 entitled "AUTONOMOUS TRANSPORTS FOR STORAGE AND RETRIEVAL SYSTEMS" previously incorporated by reference) when, for example, transitioning onto or off of the transfer decks 130B. The different types of turns may correspond to a desired orientation of the bot 110 within the storage aisles 130A or a lane of the transfer deck 130B on which the bot 110 is travelling. The floor of the transfer decks may have any suitable construction configured to support the bots 110 as they traverse their respective transfer deck(s) 130B. For exemplary purposes only, the transfer deck floors may be substantially similar to the storage aisle floors described above. The transfer deck floors may be supported by a lattice of frames and columns that may be connected to, for example, one or more of the vertical supports 612 and horizontal supports 610, 611, 613 in any suitable manner. For example, in the embodiments the transfer decks may include cantilevered arms that may be driven or otherwise inserted into corresponding slots, recesses or other openings in one or more of the vertical supports 612 and horizontal supports 610, 611, 613. In the embodiments the transfer deck floors may be supported by any suitable structure. As may be realized, a pitch of the transfer deck floors may be substantially similar to the pitch of the respective aisle floors.

In the embodiments, the storage structure 130 may include personnel floors 280 (which may include maintenance access gateways) associated with each level of the storage structure. The personnel floors 280 may be substantially similar to those described in United States Patent Application number 12/757,381 entitled "Storage and Retrieval System" filed on April 9, 2010,

the disclosure of which is incorporated herein by reference in its entirety. For example, the personnel floors 280 may be located, for example, within or adjacent to the aisles of the storage structure and/or the transfer decks 130B. In the embodiments, the personnel floors may be suitably located to provided reach in access to one side of the transfer decks 130B from within the storage structure where the other opposite side of the transfer decks 130B is accessed through any suitable work platforms/scaffolding adjacent personnel workstations and/or multilevel vertical conveyors. In the embodiments, the personnel floors 280 may run the full length of each aisle 130A or transfer deck 130B. In the embodiments the personnel floors 280 may have any suitable length. The personnel floors 280 may be vertically spaced from each other at predetermined intervals where the space between the personnel floors 280 provides a personnel work zone for resolving problems with, as non-limiting examples, the bots 110, items stored in the storage structure 130 and the storage structure 130 itself. The personnel floors 280 may be configured to provide walking surfaces for, as an example, maintenance technicians or other personnel where the walking zones are distinct from travel lanes of the bots 110. Access to the personnel floors may be provided through, for example, any suitable access gateways or points within the storage structure 130. Movable barriers or other suitable structures may be provided along the aisles 130A and transfer decks 130B to further separate unintentional interaction between, for example the bots 110 and personnel. In the embodiments, in normal operation the movable barriers may be in a stowed or retracted position to allow, for example, the bot 110 to pass and access the storage shelves 600. The movable barriers may be placed in an extended position when personnel are located in a predetermined zone or location of the storage structure 130 to block bot 110 access to the aisle(s) or portions of the transfer decks where personnel are located. In one exemplary operation of storage structure maintenance for a predetermined zone of the storage structure 130, all active bots 110 may be removed from the predetermined zone. Bots 110 that require maintenance may be disabled and de-energized within the predetermined zone. The movable barriers may be extended to prevent active bots 110 from entering the predetermined zone and any locks preventing access to the personnel floors may be unlocked or removed. The extension and retraction of the movable barriers, disabling of the bots 110 and removal of bots 110 from the predetermined zone may be controlled in any suitable manner such as by, for example, any suitable control system such as a central controller server 120 and mechanical and/or electromechanical interlocks. It is noted that in the embodiments, the storage and retrieval system may include any suitable personnel access not limited to that described above.

The main travel lanes 130BA, 130BB may also provide the bots 110 with access to vestibules 150V for each multilevel vertical conveyor 150. As can be seen in Fig. 19, vestibules 150V connect their respective multi-level vertical conveyors 150 to the transfer deck 130B. In one example, each of the vestibules may include transition areas 150TA and a conveyor interface area 1501A. The transition areas 150TA may be configured to allow the bots 110 to transition from, for example, substantially contactless guided travel (e.g. travel that is free from being constrained by rails or tracks) on the transfer deck 130B to guided travel, such as by rails or tracks, within the conveyor interface areas 150IA. The transition areas 150TA may also be configured to allow bots 110 to merge with bot traffic on the transfer decks 130B as described in, for example, United States Patent Application number 12/757,337 entitled "Control System for Storage and Retrieval Systems" previously incorporated by reference herein in its entirety. It is noted that the guided travel of the bots 110 within the conveyor interface areas 150IA may be substantially similar to the guided travel of the bots 110 within, for example, the storage aisles 130A. In the embodiments the bots may be suitably guided within the conveyor interface areas in any suitable manner. The vestibules 150V may be configured to allow the bots 110 to interface with respective multilevel vertical conveyors 150 without substantially impeding bot travel along the main travel lanes 130BA, 130BB. Shunts 130BS may also be substantially aligned with each of the transition areas 150TA for allowing access to the multilevel vertical conveyors from either of the main travel lanes 130BA, 130BB without traversing an entirety of the travel loop L1.

As may be realized, the configuration of the storage and retrieval system 100 is scalable and may change for any suitable reason such as, for non-limiting purposes, changes in storage capacity and product throughput. As an example, bots 110, multilevel vertical conveyors 150, storage bays/shelves, transfer decks 130B, transfer deck shunts 130BS or other suitable components of the storage and retrieval system 100 may be added or removed to suit any desired requirements of the warehouse in which the storage and retrieval system 100 is located.

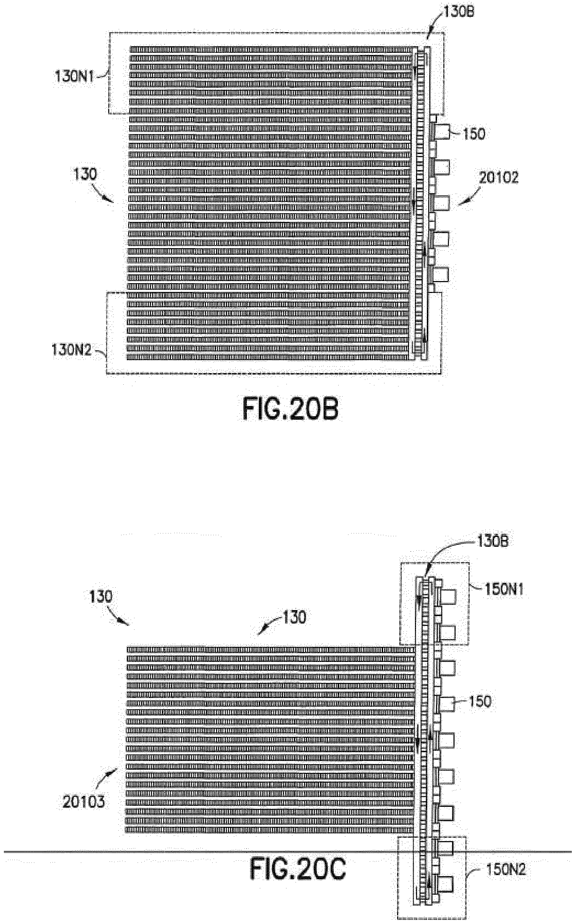

Referring to Figs. 20A-20C, an example of the scalability of the storage and retrieval system 100 is shown. In Fig. 20A a storage and retrieval system 20101 is shown. The storage and retrieval system 20101 may be substantially similar to storage and retrieval system 100 described above. However, in this example, the transfer deck 130B is extended to accommodate any suitable number of additional storage bays 130N on one side of original storage bays 130. In Fig. 20B the storage and retrieval system 20102 (which may be substantially similar to storage and retrieval system 100) is shown having an extended transfer deck 130B such that the deck extends from both sides of the original storage bays 130N. In this example, any suitable number of additional storage bays 130N1, 130N2 may be added on both sides of the storage and retrieval system. Fig. 20C illustrates another storage and retrieval system 20103 (which may be substantially similar to storage and retrieval system 100) where the transfer deck 130B is extended to include additional multilevel vertical conveyors 150N1, 150N2. In the embodiments the length of each storage aisle may be increased to increase the storage area of the storage and retrieval system. As may be realized, any suitable number of the storage bays and/or multilevel vertical conveyors can be added or removed from the storage and retrieval system. For example, if the capacity or throughput of the multilevel vertical conveyors 150 is greater than the throughput of items through the storage aisles/bays additional storage aisles/bays may be added to balance the throughput of the multilevel vertical conveyors and the storage bays and vice versa. As another non-limiting example of throughput management, any suitable controller of the storage and retrieval system, such as control server 120, may be configured to control the bot 110 travel along the transfer deck 130B and multilevel vertical conveyors so that they function as buffers/accumulators. For example, if the throughput of the multilevel vertical conveyors is less than the throughput of items through the storage aisles/bays the bots 110 may be instructed by the control server 120 to slow their travel along the travel deck 130B or stop at a designated area(s) of the travel deck 130B until a multilevel vertical conveyor is available to receive the items carries by the bot. Where multilevel vertical conveyor throughput is greater than the storage aisle/bay throughput, the multilevel vertical conveyors 150 may carry items in a substantially continuous loop until a bot is available to receive the item(s) for transport to a storage location of the storage aisles/bays. In the embodiments the throughput of the storage and retrieval system components may be managed in any suitable manner. As may be realized, the structure of the storage and retrieval system may be such that additional components may be easily added or removed in any suitable manner for changing the configuration of the storage and retrieval system. For example, the storage and retrieval system components may be modular components that can be fastened to each other in any suitable manner such as with mechanical fasteners, clips, or any other suitable fastener (including e.g. welding and chemical fasteners).

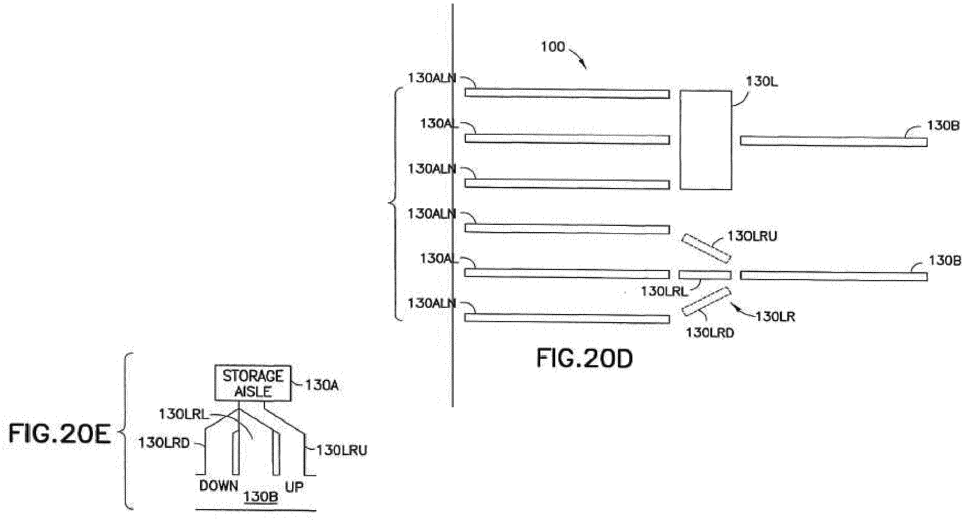

Referring to Fig. 20D another example of the scalability of the storage and retrieval system 100 is shown. In this example, additional storage aisle levels 130ALN are vertically added to the storage and retrieval system, whereas in Figs. 20A-20C the additional storage aisles 130N are added in a horizontal direction. These additional storage aisle levels 130ALN may be added between existing storage aisle levels 130AL and/or stacked above and/or below the existing storage aisle levels. In Fig. 20D the additional storage aisles 130ALN are shown, for non-limiting exemplary purposes only, as being added between existing storage aisles 130AL. In this example, while additional storage aisle levels 130ALN are added, no additional transfer decks 130B are added such that each transfer deck serves more than one storage aisle level. In the embodiments additional transfer decks 130B may also be added so that each storage aisle level has a respective transfer deck 130B. In the example, shown in Fig. 20D any suitable vertical transfer device 130L, such as for example, lifts, elevators or ramps may be located between the transfer deck 130B and the respective storage aisle levels 130ALN, 130AL to allow bots 110 to traverse between the storage aisles and the transfer decks. It should be realized that while the embodiments described herein illustrate the vertical transfer device 130L being incorporated into the storage structure, in the embodiments the vertical transfer device may be incorporated into the bots 110 in any suitable manner for allowing the bots to transition between different vertically spaced storage aisle levels from a respective one of the transfer decks. In one example, a pivotal ramp 130LR may be provided to allow access from a transfer deck 130B to respective ones of the picking aisle levels 130ALN, 130AL. In the embodiments, the ramps providing access to each of the picking aisle levels from a transfer deck may be fixed but horizontally offset from one another as can be seen in Fig. 20E where ramp 130LRL provides access to a storage aisle level 130AL in substantially the same vertical plane as the transfer deck 130B, ramp 130LRD provides access to a storage aisle level 130ALN below storage aisle level 130AL and ramp 130LRU provides access to a storage aisle level 130ALN above storage aisle level 130AL. As may be realized, each of the transfer decks 130B may be served by the multilevel vertical conveyors 150 in the manner described above. The ramps 130LR or other suitable transfer device 130L may include a transition area substantially similar to transition area 150TA for allowing the bots 110 to transition from the substantially contactless guided travel on the transfer deck 130B to the guided travel of the picking aisles 130A.

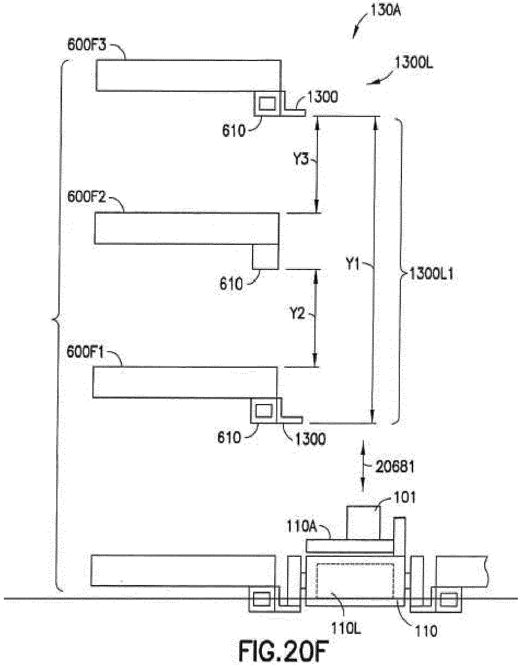

Referring to Fig. 20F, in another aspect the storage structure may be configured such that one or more levels of storage shelves are accessed by but one level of the storage aisle. For example, as described above, each storage aisle includes pairs of rails 1300 disposed on both sides of the storage aisle for the bot 110 to travel on. The pairs of rails are arranged in a vertical stack such that one pair of rails 1300 (e.g. a storage aisle level 1300L) provides bot 110 access to one or more of the vertically stacked storage shelves 600 (e.g. one storage aisle level is common to multiple storage rack levels). In one aspect each storage aisle level 1300L may provide bot 110 access to but one level of storage shelves 600 while in other aspects each storage aisle level 1300L1 may provide bot 110 access to more than one level of storage shelves 600. In still other aspects some storage aisle levels (or a portion thereof) may provide access to one level of storage shelves while other storage aisle levels (or a portion thereof, e.g., in the same or a different storage aisle of the storage structure) may provide access to more than one level of storage shelves 600. The storage aisle levels 1300L may be vertically spaced apart (e.g. the vertical distance between the pairs of rails 1300) by any suitable distance Y1 to allow for the location of at least one storage level between the storage aisle levels 1300L. For exemplary purposes only the distance Y1 may be, for example, about twenty-four inches while in other examples the distance Y1 may be more or less than about twenty-four inches. The distance Y2, Y3 between each storage shelf 600 may be any suitable distance to allow for case units of any suitable size to be placed on the respective storage shelves 600. For exemplary purposes only, the vertical distance Y2 between storage shelves 600F1 and 600F2 may be sufficient for placement of a case unit having a height of about five inches (or any other suitable height) while in other examples the distance Y2 may be any suitable distance for allowing placement of a case unit having a height of more or less than about five inches (or any other suitable height). Also for exemplary purposes only, the vertical distance Y3 between storage shelves 600F2 and 600F3 may sufficient for placement of a case unit having a height of about nine inches while in other examples the distance Y3 may be any suitable distance for allowing placement of a case unit having a height of more or less than about nine inches. While the distances Y2 and Y3 are described above as being different from each other so that the respective storage shelves can accommodate case units of differing heights, in other aspects the distances Y2, Y3 between storage shelves 600 may be substantially the same.

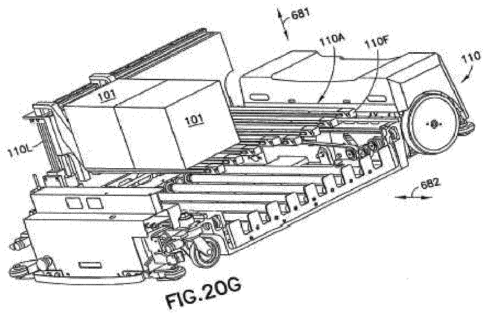

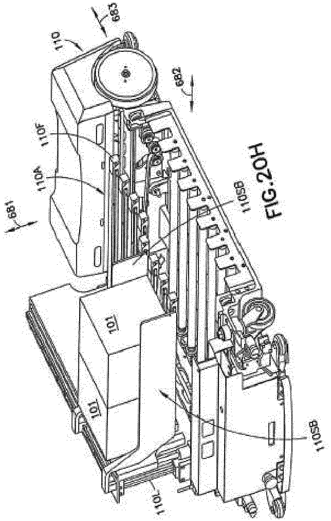

Referring also to Fig. 20G, where one or more of the storage aisle levels 1300L provides bot access to at least one level of storage shelves 600 the bot 110 may be configured to transport case units 101 from the storage aisle level to any one of the storage shelf levels served by that storage aisle level 1300L. For example, in one aspect the bot may have a lift unit 110L configured to raise and lower a transfer arm 110A of the bot 110 in the direction of arrow 20681 so that the transfer arm 110A may be extended/retracted in the direction of arrow 682 for transferring the case units 101 between the bot 110 and the respective storage shelf levels. The lift unit 110L may be any suitable drive configured to raise and lower the transfer arm 110A such as, for example, a hydraulic lift, a ball screw mechanism, any suitable linear actuator, a rail system, chain and sprocket system, belt and pulley system or any other suitable drive system. The transfer arm 110A includes fingers 110F for supporting one or more case units 101 during transfer of the case units between the bot 110 and a storage shelf 600. In one aspect, the lift unit 110L may be configured to lift the transfer arm as a unit while still allowing the fingers 110F to be vertically movable relative to a frame of the transfer arm 110 and extendible in the direction of arrow 682 using a common drive axis as described in, for example, United States Patent Application number 13/326,952 (Atty. Docket Number 1127P14264-US (PAR) which is a non-provisional of US serial number 61/423,365 filed on December 15, 2010) entitled "Automated Bot with Transfer Arm" filed on December 15, 2011, and United States Patent Application number 13/327,040 (Atty. Docket Number 1127P14263-US (PAR) which is a non-provisional of US serial number 61/423,220 filed on December 15, 2010) entitled "Bot Payload Alignment and Sensing" filed on December 15, 2011 previously incorporated herein by reference. Referring also to Fig. 20H, the bot 110 may also include side blades 110SB mounted to the bot arm 110A. One or more of the blades 110SB may be moved along the longitudinal axis of the bot 110 in the direction of arrow 683 for aligning the pickface (e.g. one or more case units 1101) on the bot arm 110A. The translational movement of the one or more side blades 110SB may allow for the positioning of the bot payload anywhere along the longitudinal axis of the bot within the bot payload area and may provide fine adjustment for case positioning onto the storage shelves 600 (and 600F1-600F3). It is noted that in this aspect the side blades 110SB do not lift the case units 1101 but aid in case unit 1101 control during picking and placing the case units. It is noted that one side blade 110SB may be fixed and act as a datum for aligning the case units 1101.

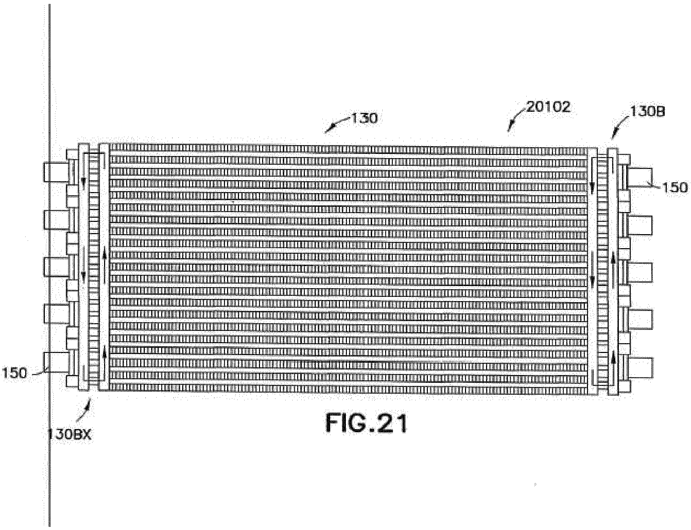

Fig. 21 illustrates another exemplary storage and retrieval system 20102 that may be derived from storage and retrieval system 100. Storage and retrieval system 20102 may be substantially similar to storage and retrieval system 100. However, in Fig. 21 of the embodiments the storage and retrieval system 20102 includes transfer decks 130B, 130BX and multilevel vertical conveyors 150 located at opposite ends of the storage structure 130.

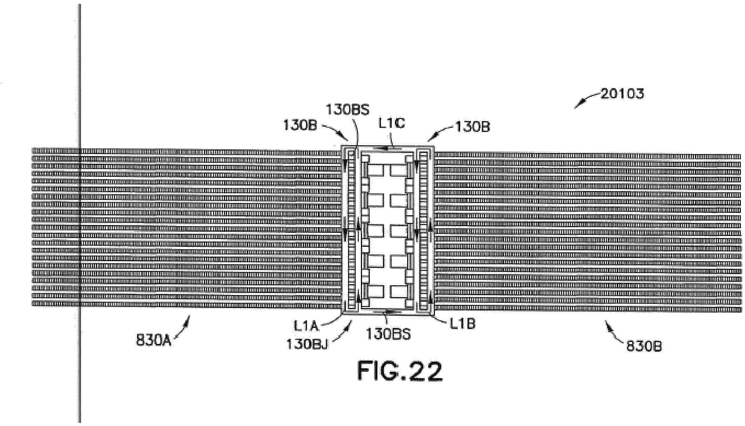

Fig. 22 is another storage and retrieval system 20103 in accordance with the embodiments. In Fig. 22, storage structures 830A, 830B and their respective transfer decks 130B and multilevel vertical conveyors 150 are arranged in an opposing relationship. The transfer decks 130B may be joined by shunts 130BS at, for example, the ends of the transfer decks to form a unitary transfer deck 130BJ. As may be realized, shunts 130BS may connect the transfer decks 130B at any suitable locations along the length of the transfer decks 130B. In this example, each transfer deck 130B forms a respective bot 110 travel loop L1A, L1B while the shunts allow for another travel loop L1C that is inclusive of the smaller travel loops L1A, L1B. Access to the multilevel vertical conveyors 150 for introducing or removing items to or from the storage and retrieval system, in this example, may be provided in any suitable manner such as through conveyors, carts, or any other suitable conveyance device that may be arranged so as to not interfere with the shunts 130BS that connect the transfer decks 130B.

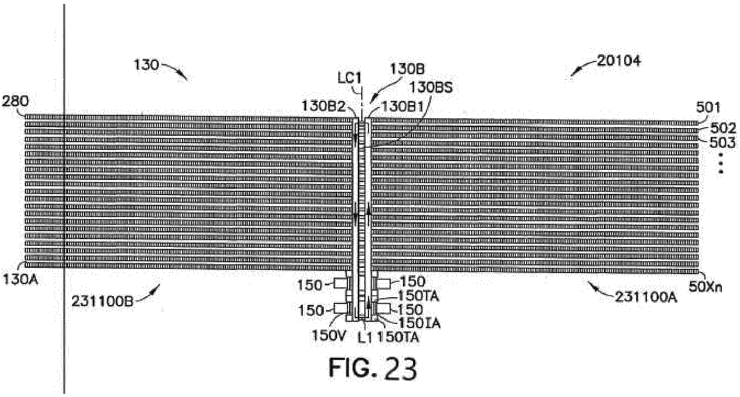

Referring to Fig. 23, another exemplary storage and retrieval system 20104 is shown. The storage and retrieval system 20104 may be substantially similar to storage and retrieval system 100 except were otherwise noted. In Fig. 23 the storage modules 501, 502, 503, ..., 50Xn may be arranged on either side of the transfer deck 130B in, for example, a substantially symmetrically opposed or "butterfly" configuration. In this example, the transfer deck 130B is lengthened to extend past the storage aisles 130A where the multilevel vertical conveyors are connected to the transfer deck 130B at this extended portion of the transfer deck as will be described in greater detail below. It is noted that while four multilevel vertical conveyors 150 are shown in Fig. 23 for exemplary purposes only, in the embodiments the storage and retrieval system may have more or less than four multilevel vertical conveyors.

The substantially symmetrically opposed configuration of the storage structure may allow for reduced transfer deck 130B and storage aisle 130A lengths while providing an increased amount of storage spaces within the storage aisles when compared to warehouse storage structures having storage aisles arranged on but one side of a transfer deck and having substantially the same storage capacity. The substantially symmetrically opposed storage structure may also provide for reducing the travel time of the bots 110 on the transfer deck 130B and storage aisles 130A when compared to the warehouse storage structures having storage aisles arranged on but one side of a transfer lane having substantially the same storage capacity.

In the embodiments, the transfer deck 130B may have, for example, main travel lanes 130B1, 130B2 connected by any suitable number of shunts 130BS which are substantially similar to those described above. The main travel lanes 130B1, 130B2 may also provide the bots 110 with access to vestibules 150V for each multilevel vertical conveyor 150 in a manner substantially similar to that described above. As can be seen in Fig. 23, the arrangement of the multilevel vertical conveyors 150 and their respective vestibules 150V may be arranged in a substantially symmetrical opposing configuration such that the arrangement of the multilevel vertical conveyors and vestibules are substantially symmetrical about a longitudinal centerline LC1 of the transfer deck 130B.

The storage structure 130 includes at least two opposing storage sections 231100A, 231100B extending in substantially opposite directions from the transfer deck 130B. In the embodiments there may be more than two opposing storage sections. Each of the opposing storage sections 231100A, 231100B may be substantially similar to each other such that the storage structure 130 is substantially symmetrical about the longitudinal centerline LC1 of the transfer deck 130B. It is noted, however, that while the storage structure 130 itself may have a substantially symmetrically opposed configuration the items stored within each storage section 231100A, 231100B may not have substantially symmetric storage locations (e.g. the allocation of case units/pickfaces in each of the storage sections 231100A, 231100B is substantially independent of the allocation of case units/pickfaces in the other one of the storage sections 231100A, 231100B). In the embodiments, the allocation of the case units/pickfaces in each of the storage sections 231100A, 231100B may also be substantially symmetrical. As may be realized, the end of each storage aisle 130A of each storage section 231100A, 231100B may include a transition bay or area substantially similar to the transition areas 150TA that allows the bots 110 to transition onto the transfer decks 130B.

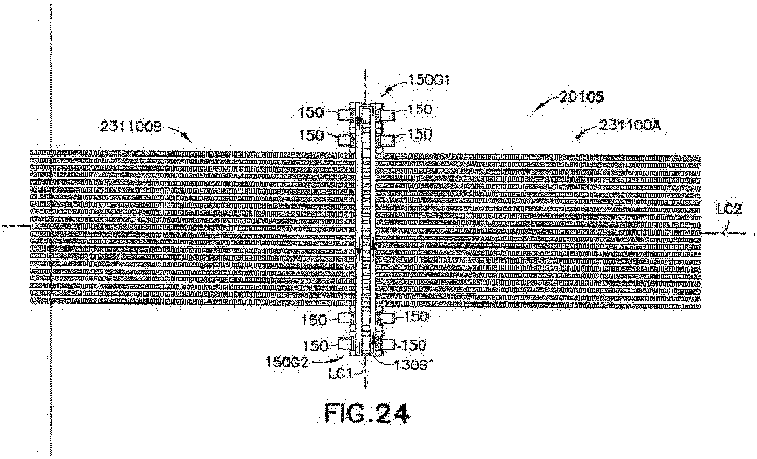

Fig. 24 illustrates another substantially symmetrically opposed storage and retrieval system 20105 in accordance with the embodiments. In Fig. 24 the transfer deck 130B' (which may be substantially similar to transfer deck 130B) extends on opposite sides of the storage sections 231100A, 231100B so that multilevel vertical conveyor groups 150G1, 150G2 may be placed on opposite sides of the storage sections along the longitudinal axis LC1. While there are four multilevel vertical conveyors shown in each of the multilevel vertical conveyor groups 150G1, 150G2, in the embodiments each group may have any suitable number of multilevel vertical conveyors. In a manner substantially similar to that described above, the multilevel vertical conveyors 150 of each multilevel vertical conveyor group 150G1, 150G2 may be arranged in a substantially symmetrically opposed configuration. However, in the embodiments the conveyors may not have a substantially symmetrically opposed arrangement. In this example, the multilevel vertical conveyor groups 150G1, 150G2 may also be arranged substantially symmetrically along a lateral centerline LC2 of the transfer deck 130B'.

Referring to Fig. 24, another a storage and retrieval system 20106 having a substantially symmetrically opposed storage structure 130" is shown in accordance with the embodiments. In this example, the storage and retrieval system 20106 may be substantially similar to storage and retrieval system 20104 described above. However, in this example, the substantially symmetrically opposed storage structure 130" includes, for example, four storage sections 231100A, 231100B, 1110A, 1110B. The storage sections 231100A, 231100B, 1110A, 1110B may be arranged in opposing pairs where each storage area in an opposing pair is located on opposite sides of the transfer deck 130B" (which is substantially similar to transfer deck 130B described above). For example, storage sections 231100A, 231100B form a first pair of opposing storage sections and the storage sections 1110A, 1110B form a second pair of opposing storage sections. In the embodiments, there may be more than two pairs of opposing storage sections. These pairs of storage sections may be symmetrically opposed about the longitudinal centerline LC1 of the transfer deck 130B" in a manner substantially similar to that described above with respect to Fig. 23.

In this example the storage and retrieval system 20106 includes multilevel vertical conveyors 150 that are located between the first pair of opposing storage areas 231100A, 231100B and the second pair of opposing storage areas 1110A, 1110B along the longitudinal centerline LC1. In this example, there are four multilevel vertical conveyors (e.g. in opposing pair configurations as described above) but in the embodiments there may be more or less than four multilevel vertical conveyors arranged in, for example, opposing pairs or any other suitable arrangement.

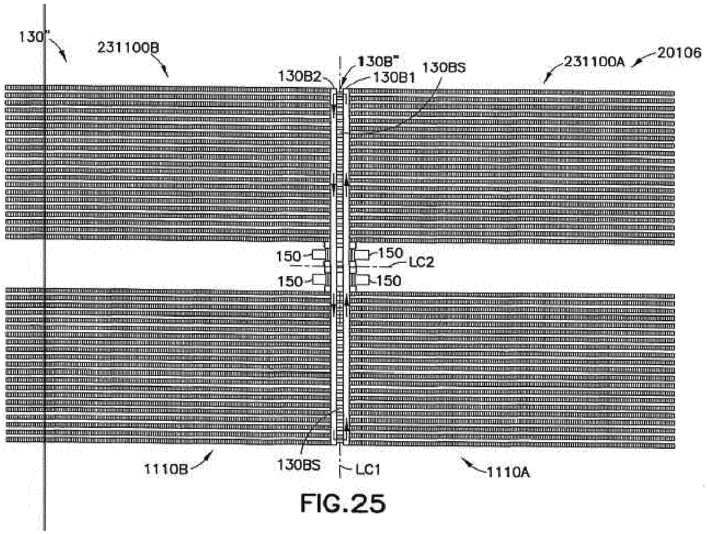

As can be seen in Fig. 25, the transfer deck also includes lateral centerline LC2. In this example the multilevel vertical conveyors 150 and the storage sections 231100A, 231100B, 1110A, 1110B are also substantially symmetrical about the lateral centerline LC2. Here, the first pair of storage sections 231100A, 231100B and two of the multilevel vertical conveyors 150 are located on a first side of the lateral centerline LC2 while the second pair of storage sections 1110A, 1110B and the other two multilevel vertical conveyors are located on a second side of the lateral centerline LC2 in an opposing configuration. As can be seen in Fig. 25 the storage and retrieval system 20106 is substantially symmetrical along two axes (e.g. LC1, LC2) of the transfer deck 130B". As may be realized while there are four multilevel vertical conveyors shown in Fig. 25, in the embodiments there may be any suitable number of multilevel vertical conveyors disposed between the storage section pairs. As may also be realized, while there are two pairs of storage areas in this example, there may be more than two pairs of storage areas arranged in a substantially symmetrical opposing configuration relative to the lateral centerline LC2 of the transfer deck 130B".

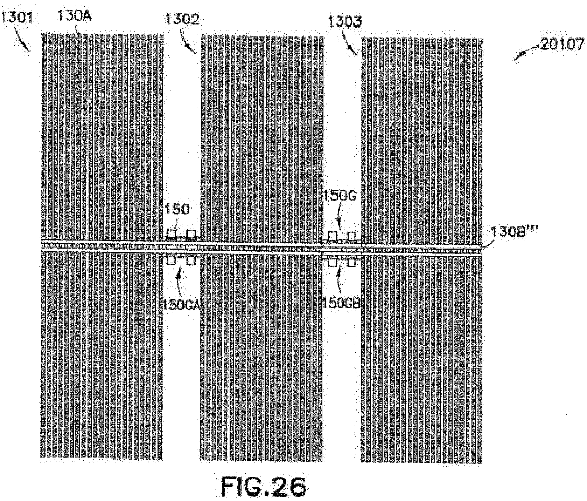

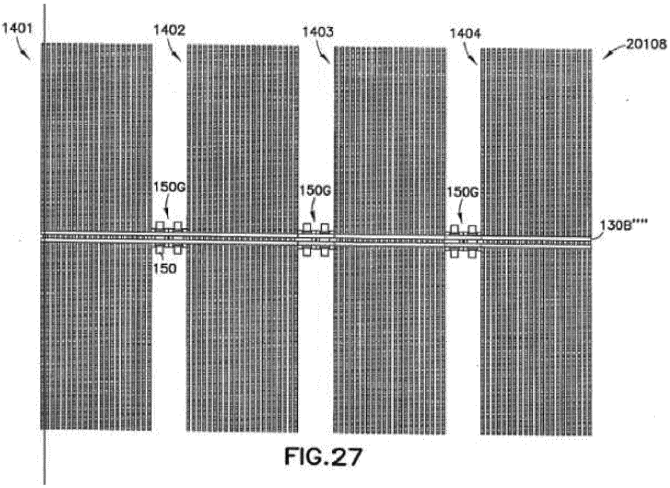

Figs. 26 and 27 illustrate storage and retrieval systems 20107 and 20108 with multiple pairs of substantially symmetrical opposing storage areas. In Fig. 26 the storage and retrieval system 20107 includes two groups 150G of multilevel vertical conveyors 150 and three pairs of opposed storage sections 1301, 1302, 1303. Access is provided to each multilevel vertical conveyor 150 and each storage aisle 130A of the multilevel vertical conveyor groups 150G and storage sections 1301, 1302, 1303 by transfer deck 130B''', which may be substantially similar to transfer deck 130B described above. In Fig. 27 the storage and retrieval system 20108 includes three groups 150G of multilevel vertical conveyors 150 and four pairs of opposed storage sections 1401, 1402, 1403, 1404. Access is provided to each multilevel vertical conveyor 150 and each storage aisle 130A of the multilevel vertical conveyor groups 150G and storage sections 1401, 1402, 1403, 1404 by transfer deck 130B'''', which may be substantially similar to transfer deck 130B described above. As may be realized, the configurations of the substantially symmetrically opposed storage and retrieval systems 20107, 20108 of Figs. 26 and 27 are exemplary only and in the embodiments, the storage and retrieval system 20107, 20108 may have any suitable number of multilevel vertical conveyors groups and/or pairs of opposed storage sections. In the embodiments the storage and retrieval systems 20107, 20108 may include multilevel vertical conveyor groups on one or more ends of their respective transfer decks 130''', 130'''' in a manner substantially similar to that described above with respect to Figs. 23 and 24.

In addition to the configuration of the storage and retrieval system, the travel time of, for example the bots 110 along the transfer decks 130B and storage aisles 130A of the warehouse storage structures described herein may be managed in any suitable manner such as by, for example, any suitable controller of the storage and retrieval system. In one example, the control server 120 may be configured to assign bots 110 for operation with predetermined ones of the multilevel vertical conveyors and/or storage aisles in a manner substantially similar to that described below. For example, referring to Fig. 26 the control server 120 may be configured to assign bots 110 for operation with predetermined ones of the multilevel vertical conveyor groups 150G and/or storage sections 1401, 1402, 1403, 1404. For exemplary purposes only, referring to Fig. 26 a first group of bots 110 may be allocated for operation with multilevel vertical conveyor group 150GA and storage sections 1301, 1302 while a second group of bots may be allocated for operation with multilevel vertical conveyor group 150GB and storage sections 1302, 1303. As may be realized, other suitable bot allocations can be made with respect to the storage sections and multilevel vertical conveyor groups for controlling the travel time of the bots within the storage and retrieval systems. In this manner the travel time of each bot along the transfer deck and the respective storage aisles to which the bot is assigned is substantially the same as the time for traversing the storage aisles and transfer deck of the warehouse storage structure described above with respect to Figs. 19, 21, and 23-25. Similar bot allocations can be made with respect to the warehouse storage structure of Figs. 20A-20F, 22, 27 or any other suitable warehouse storage structure described herein.

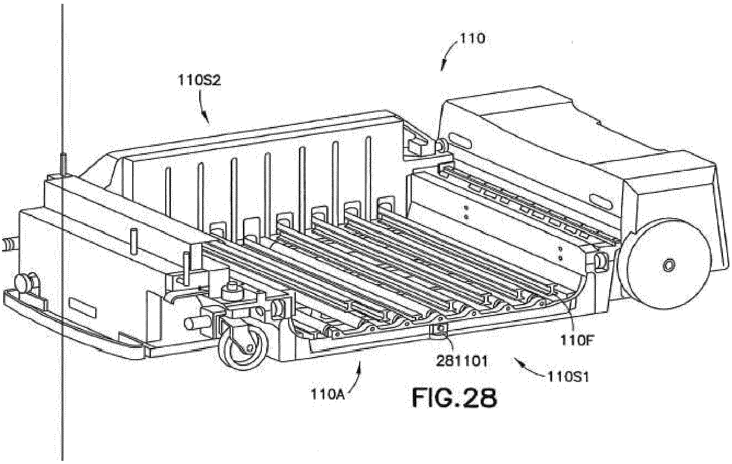

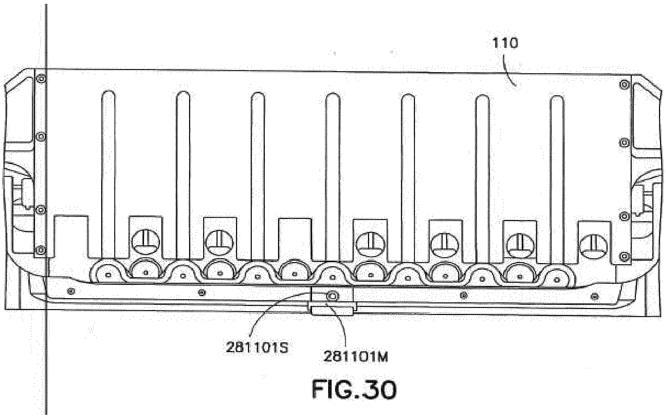

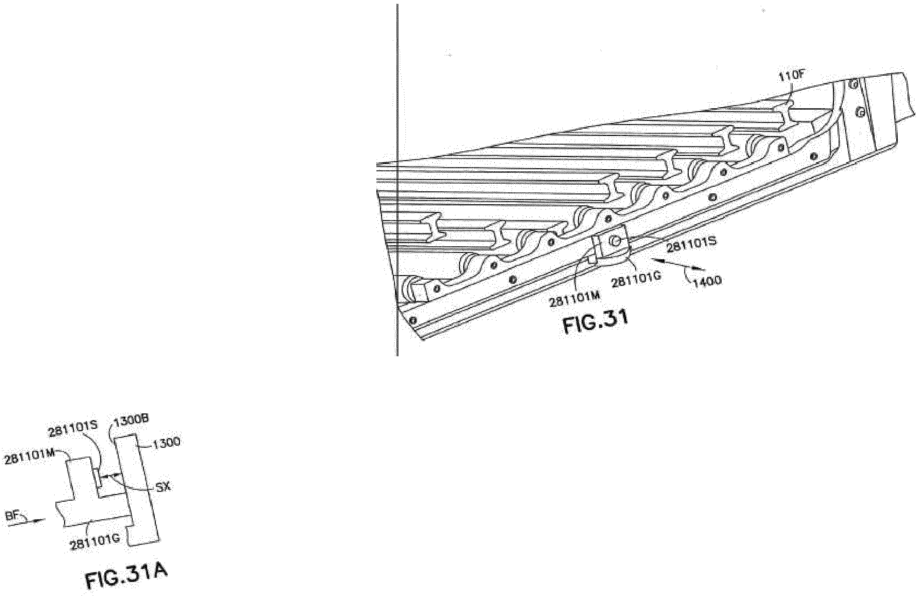

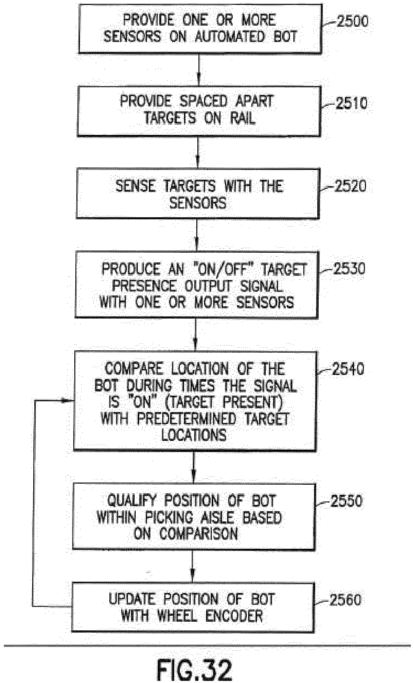

Referring to Figs. 28-32, a bot location system using proximity sensors for determining the location of the bot in the picking aisle 130A and/or relative to holding locations A, B on shelves of the multilevel vertical conveyors 150A, 150B is illustrated. In this aspect the bot 110 includes at least one proximity sensor module 281101 mounted to the frame of the bot (Fig. 32, Block 2500). The proximity sensor module 281101 may be mounted to the frame at any suitable location and for exemplary purposes is shown as being mounted to the frame below the payload holding area of the bot. Here the sensors are located on the bot as a position for sensing targets or position determining features 1201-1203 disposed on the rails 1300 on which the bot travels through the picking aisles 130A (and/or on walls of the transfer area 295 and/or multilevel vertical conveyor access location - not shown - in a manner substantially similar to that described above). In one aspect the proximity sensor module 281101 includes a sensor mount 281101M that is movably mounted to the frame of the bot 110 in any suitable manner. In one example, the sensor mount 281101M may be spring loaded or otherwise compliant such that the sensor mount is slidably movable in the direction of arrow 1400 and biased outwards towards/against the rail 1300 (and/or walls of the transfer area 295 and/or multilevel vertical conveyor access location) as the bot 110 moves through the picking aisles (or transfer areas/ multilevel vertical conveyor access locations). In one aspect, the sensor mount 281101M may have an integrally formed guide member 281101G that rides along in substantial contact with the rail 1300 (e.g. the guide member is held against the rail 1300 by the biasing force BF of the spring loaded mount) so that a substantially constant distance SX is maintained between the targets 1201-1203 and the proximity sensor 281101S regardless of position variance between the bot 110 frame and the targets. In other aspects the guide member 1101G may be affixed or otherwise mounted to the sensor mount 1101M in any suitable manner. The distance SX may be any suitable distance that allows the proximity sensor to sense the targets 1201-1203. In one example, the distance SX may be about 2 mm while in other examples the distance SX may be more or less than about 2 mm. The proximity sensor 281101S may be mounted or otherwise affixed to the sensor mount 281101M in any suitable manner and may be any suitable proximity sensor (e.g. magnetic sensors, capacitance sensors, inductance sensors and the like). For exemplary purposes only the proximity sensor may be a Hall effect sensor. It is also noted that while only one sensor module 281101 is shown on the bot 110 in other aspects there may be more than one sensor module 281101 disposed at any suitable locations on the bot for sensing the targets 1201-1203.

As noted above, and referring to Fig. 29, the targets 1201-1203 may be provided on the rails 1300 of the picking aisles and/or walls of the transfer area 295 and/or multilevel vertical conveyor access location (Fig. 32, Block 2510) . In one aspect, the targets 1201-1203 may be provided on the rails on both sides of the picking aisle 130A so that the proximity sensor 281101 of the bot may determine its position within the picking aisle by sensing the targets regardless of which travel orientation the bot enters the picking aisle to allow the bot to pick from both sides of the aisle. In other aspects the targets may be provided on but one side of the picking aisle and at least one proximity sensor module 281101 may be disposed on both lateral sides 110S1, 110S2 of the bot so that the targets on but one side of the aisle can be sensed by the proximity sensors of the bot regardless of the travel orientation of the bot for allowing the bot to pick from both sides of the aisle. As may be realized the targets 1201-1203 may be located on rails in a reference frame of the storage shelf or storage shelf area. For example, the targets 1201-1203 may have a predetermined relationship with the slats 620L1, 620L2 or other any other suitable feature of the storage shelf (such as when the storage shelf is configured without slats or otherwise). The targets 1201-1203 may be integrally formed with the rails 1300 or otherwise mounted to or affixed to the rails 1300 in any suitable manner. In one aspect the targets 1201-1203 may be formed in the rails 1300 during manufacture of the rails 1300. The targets 1201-1203 may have any suitable configuration that allows the targets to be sensed or otherwise detected by the proximity sensor 281101 of the bot 110. For exemplary purposes only, in one aspect the targets 1201-1203 may be apertures, such as e.g. slots or holes, or recesses provided in a side wall 1300B of the rails 1300. Also for exemplary purposes only, the slots may be about 6 mm wide by about 12 mm tall slots or slots having any other suitable dimensions. In other aspects the targets 1201-1203 may be any suitable target for influencing the proximity sensor 281101 to produce an on/off signal as will be described below. The targets 1201-1203 may be provided in the rails 1300 at predetermined spaced intervals (e.g. the distances between the targets and the location of each target is known) so that the targets 1201-1203, along with the proximity sensor 281101, form an incremental (or absolute) and discrete position encoder for determining a location of the bot within, for example, a picking aisle 130A or any other suitable location within the storage and retrieval system 100. In one aspect the targets 1201-1203 may be spaced about 0.3048 m (about 1 ft) from each other. In other aspects the targets 1201-1203 may be spaced by a distance that is more or less than about 0.3048 m. In still other aspects the targets 1201-1203 may have a varied spacing between the targets that provides for an absolute position determination within, for example, a picking aisle or any other suitable location of the storage structure.

As noted above the targets 1201-1203 may also be disposed at walls of the transfer area 295 and/or multilevel vertical conveyor access location. In a manner substantially similar to that described above, the targets 1201-1203 may be integrally formed in the walls of the transfer area 295 and/or multilevel vertical conveyor access location or otherwise affixed in any suitable manner to the walls. The targets 1201-1203 at the transfer area 295 and/or multilevel vertical conveyor access location may be located on the walls in a reference frame of a respective one of the transfer area 295 and/or multilevel vertical conveyor so that the targets 1201-1203 have a predetermined relationship with, for example, a shelf of the multilevel vertical conveyor or any other reference point at the transfer station or of the multilevel vertical conveyor in a manner substantially similar to that described above with respect to the picking aisles.

In a manner similar to that described above, the controller 1220 of the bot 110 may have access to a storage and retrieval system structure file. The structure file may include the location of each structural feature of the storage and retrieval system including the positions for each target 1201-1203 within their respective picking aisles 130A. The target 1201-1203 locations specified by the structure file may assist in qualifying the location of the targets for determining the position of the bot 110 within, for example, a picking aisle 130A. For example, as the bot travels along, for example, a picking aisle the bot 110 senses the targets 1201-1203 (Fig. 32, Block 2520) with the proximity sensor module 281101 such that the proximity sensor module 281101 produces an on/off signal (Fig. 32, Block 2530) in a manner substantially similar to that described above. The bot 110 qualifies the target(s) 1201-1203 of the rail 1300 with the proximity sensors 281101 where the controller 1220 of the bot compares an estimated location of the bot 110 using bot odometry (obtained from e.g. wheel encoders 720 in a manner substantially similar to that described above) at the instant in time when the target 1201-1203 is sensed with the location of the target 1201-1203 as specified by the information in the structure file (Fig. 32, Block 2540). If the comparison between the estimated bot location and the location of the target 1201-1203 from the structure file coincide within a predetermined tolerance the location of the bot (and the sensor sensing the slat) is qualified (Fig. 32, Block 2550) with the target 1201-1203 such that the bot 110 knows its substantially exact location within the picking aisle 130A.

In a manner substantially similar to that described above, in the area between targets 1201-1203 the bot 110 may be configured to obtain odometry information from wheel encoders 720 of the bot 110 to substantially continuously update an estimated position of the bot 110 (e.g. by adding the distance traveled by the bot as determined from the rotation of one or more of the bot's wheels to the bots last qualified position or any other suitable previously determined position of the bot) for updating a position of the bot 110 with the wheel encoders (Fig. 32, Block 2560). For example, the estimated position of the bot 110 in the area between targets 1201-1203 may be based off of, for example, the position of the last target 1201-1203 detected and qualified (e.g. the location is verified through comparison with the structure file) in a manner substantially similar to that described above. The bot odometry may be used to align the fingers 110F of the arm 110A with the slats for transferring containers between the bot 110 and the storage shelf 600.

It is noted that, the positioning of the bot within, for example, the picking aisles 130A may be decoupled from the structure of the storage shelves 600. For example, if the slats 620L1, 620L2 become deformed or bent this deformation will have substantially no impact on the location determination of the bot within the picking aisles as the targets 1201-1203 being sensed by the proximity sensor 281101S are disposed on the rails 1300. This allows for the modification and/or replacement of the slats 620L1, 620L2 without substantially impacting the ability of the bot to determine its location within the storage and retrieval system. As may be realized, in one aspect, there may be some correlation between the targets 1201-1203 and the slats 620L1, 620L2 to allow for inserting fingers 110F of the arm 110A between the slats for transferring containers between the bot 110 and the storage shelves 600. In other aspects the bot 110 may include any suitable sensors, such as those described above, for detecting the positions of the slats to allow for inserting fingers 110F of the arm 110A between the slats for transferring containers between the bot 110 and the storage shelves 600.

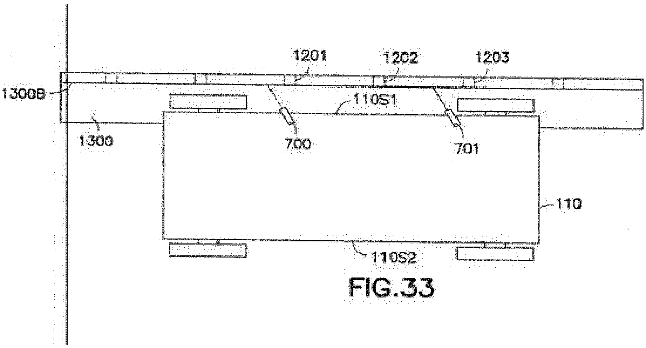

Referring now to Fig. 33, in one aspect of the disclosed embodiment, the beam sensors 700, 701 described above with respect to Figs. 7A-13 may be positioned on the frame of the bot below the payload carrying area in a manner substantially similar to the proximity sensor 281101. The sensors 700, 701 may be positioned to sense the targets 1201-1203 on the rails 1300 so that as each target 1201-1203 is sensed by a respective sensor 700, 701 that sensor produces an on/off signal in a manner substantially similar to that described above with respect to the slat detection for determining a position of the bot in a manner substantially similar to that described above. As may be realized, the bot may have sensors 700, 701 on both lateral sides of the bot 110S1, 110S2 so that the sensors 700, 701 may detect the targets 1201-1203 regardless of the travel orientation of the bot where the targets 1201-1203 are located on but one rail 1300 in the picking aisle 130A.

In other aspects the bot 110 may include both the beam sensors 700, 701 and one or more proximity sensors 281101 that are used in conjunction with each other for determining a position of the bot within the storage structure. In one aspect the proximity sensors 281101 may be used to determine a location of the bot within the picking aisle 130A while the beam sensors 700, 701 may be used to determine a location of the bot in an area between the targets 1201-1203 for aligning the arm 110A of the bot with the slats on the storage shelf 600 for transferring containers between the bot 110 and the shelf 600. In other aspects the beam sensors 700, 701 and proximity sensors 281101 may be used in any suitable manner for determining a location of the bot within the storage structure and for transferring containers between the bot 100 and the storage shelves 600.

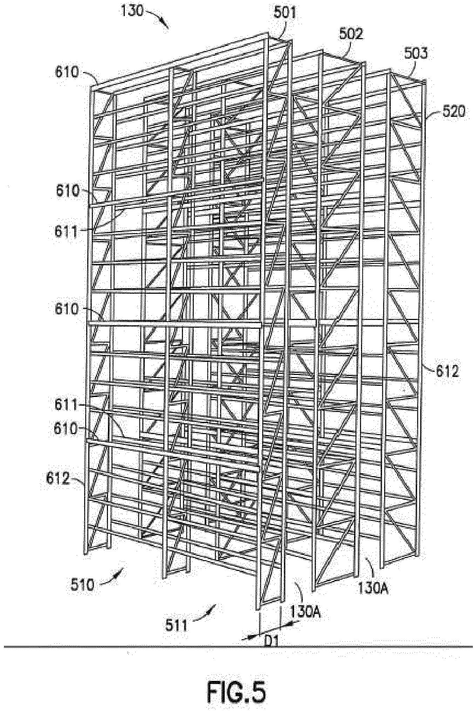

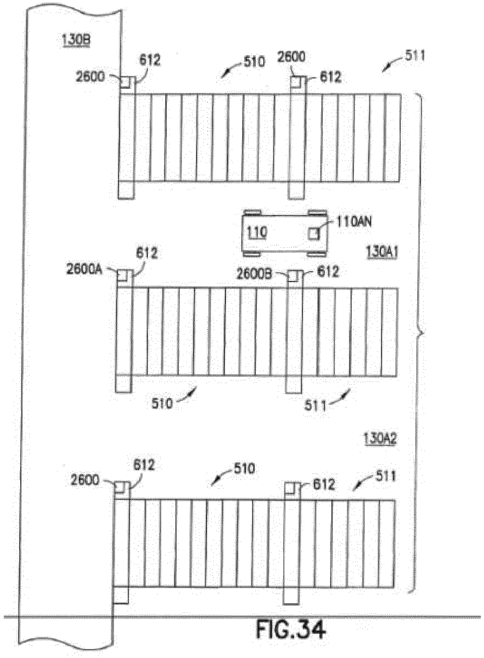

Referring now to Fig. 34 the storage and retrieval system may also include a bot location system for locating the bot upon, for example, initialization of the bot and during, for example, travel of the bot along the transfer deck 130B. In one aspect, the bot location system may use radio waves for determining a location of the bot and include any suitable number of transmitters and receivers. In other aspects the bot location system may use any suitable devices capable of allowing for a position determination of the bot such as, for example, optical transmitters and receivers and acoustic transmitter and receivers. In one aspect radio device 2600, such as transponders, transceivers, transmitters, etc., may be placed at any suitable locations within the storage structure on, for example, the vertical 612 or horizontal 610, 611 (Fig. 5) supports of the storage structure. For exemplary purposes, the radio devices 2600 may be placed at the intersection between each picking aisle 130A and the transfer deck 130B and at each storage bay 510, 511 of the picking aisles 130A. In one aspect the radio devices 2600 may be passive radio devices such as radio frequency identification (RFID) tags while in other aspects the radio devices may be active devices. Where the radio devices 2600 are passive the bot 110 may include a transceiver and antenna 110AN that is configured to communicate with and energize the transponders 2600 for receiving information stored in the transponders 2600. The information stored in the transponders may include a storage aisle identification, a storage bay identification, a multilevel vertical conveyor location, transfer deck location and/or any other location information pertaining to a location within the storage structure. The bot 110 may be configured to interrogate the radio devices 2600 at any suitable times during the operation of the bot such as when travelling through the storage structure or upon initialization (e.g. turning on) of the bot 110. In one aspect when a bot 110 is initialized within the storage structure the bot 110 may interrogate one or more nearby radio devices 2600 and receive position information from the devices 2600 as to where the bot is located. In the example, shown in Fig. 34 the bot 110 may receive information from radio devices 2600A, 2600B that is processed by, for example, controller 1220 indicating the bot is located in aisle 130A1 between bays 510 and 511. This position information may provide an initial location of the bot 110 that may be supplemented and refined by position information received from one or more of the sensors 700, 701, 281101. In other aspects, the radio devices 2600 may be interrogated by the bot 110 while the bot 110 is moving at substantially high speeds along the transfer deck and picking aisles such that when the bot 110 receives position information from the radio devices 2600 that the bot 100 is located at a predetermined location the bot may slow down and obtain position information from one or more of the sensors 700, 701, 281101. As may be realized, the radio devices 2600 and the transceiver and antenna 110AN may also be used to obtain a position of the bot 110 with any desired accuracy such as through any suitable analysis of the signals received from the radio devices 2600 that may or may not be supplemented by position information obtained from sensors 700, 701, 281101.

In a first aspect of the disclosed embodiment a storage and retrieval system is provided. The storage and retrieval system includes a storage structure having storage shelves, each storage shelf having slats for supporting stored items where the slats are spaced apart from each other by a predetermined distance. An autonomous transport vehicle is also provided where the autonomous transport vehicle includes at least one sensor configured to sense each of the slats and output a signal indicating when a slat is sensed. A controller is provided for verifying a location of the autonomous transport vehicle within the storage structure based on at least the output signal.

In accordance with a first sub-aspect of the first aspect of the disclosed embodiment the controller is configured to compare a location of the autonomous transport vehicle at a time the slat is sensed with a predetermined location of the slat and updating a verified location of the autonomous transport vehicle if the locations substantially coincide.

In accordance with the first sub-aspect of the first aspect of the disclosed embodiment, the controller is configured to ignore the output signal of the at least one sensor where the locations do not substantially coincide.

In accordance with a second sub-aspect of the first aspect of the disclosed embodiment, the controller is configured to continuously update an estimated location of the autonomous transport vehicle based on a last known verified location of the autonomous transport vehicle.

In accordance with the second sub-aspect of the first aspect of the disclosed embodiment, the autonomous transport vehicle includes at least one wheel encoder and the controller is configured to obtain wheel encoder information for updating the estimated location of the autonomous transport vehicle.

In accordance with a third sub-aspect of the first aspect of the disclosed embodiment the autonomous transport vehicle is configured to align transfer arm fingers of the autonomous transport vehicle with spaces located between the slats of a respective storage shelf based on the determined location of the autonomous transport vehicle for extending the transfer arm fingers into the spaces without contacting the slats.

In accordance with the first aspect of the disclosed embodiment the autonomous transport vehicle includes a case unit detection sensor configured for detecting case units located on the storage shelf and the controller is configured to determine a position of the autonomous transport vehicle based on the sensed case units.

In accordance with a second aspect of the disclosed embodiment, a storage and retrieval system is provided. The storage and retrieval system includes at least one multilevel vertical conveyor having at least one shelf having support finger. At least one wall is also provided adjacent the multilevel vertical conveyor, the wall including protrusions substantially aligned with the support fingers. An autonomous transport vehicle is provided where the autonomous transport vehicle includes at least one sensor configured to sense each of the protrusions and output a signal indicating when a protrusion is sensed. A controller is provided and is configured to determine a location of the autonomous transport vehicle relative to the support fingers based on the output signal from the at least one sensor.

In accordance with the second aspect of the disclosed embodiment the autonomous transport vehicle includes a transfer arm having transfer fingers, the autonomous transport vehicle being configured to align the transfer arm fingers with spaces located between the support fingers of the at least one shelf based on the determined location of the autonomous transport vehicle for extending the transfer arm fingers into a path of the shelf without substantial contact with the supporting fingers.

In accordance with the second aspect of the disclosed embodiment, the at least one shelf includes at least two item holding locations and the autonomous transport vehicle includes a transfer arm, the autonomous transport vehicle being configured to align the transfer arm with one of the at least two item holding locations based on the output signal from the at least one sensor.

In accordance with a third aspect of the disclosed embodiment an encoder for determining a position of an autonomous transport vehicle is provided. The encoder includes at least one slat mounted adjacent a travel lane of the autonomous transport vehicle, at least one sensor mounted on the at least one autonomous transport vehicle where the at least one sensor is configured to sense the at least one slat and output a presence signal when each of the at least one slat is sensed, and a controller configured to receive the presence signal and determine a location of the autonomous transport vehicle along the travel path based on the presence signal.

In accordance with the third aspect of the disclosed embodiment, the at least one slat comprises item supports of a storage shelf.

In accordance with the third aspect of the disclosed embodiment, the at least one slat comprises a protrusion mounted on a wall adjacent the travel lane.

In accordance with the third aspect of the disclosed embodiment, the at least one sensor comprises at least one of a beam sensor and a proximity sensor.

In accordance with the third aspect of the disclosed embodiment, wherein each of the at least one slats are spaced from each other by a predetermined pitch and a distance between each of the at least one sensors are spaced apart from each other by a fractional portion of the pitch.

In accordance with the third aspect of the disclosed embodiment, the at least one sensor is angled relative to a face of the at least one slat.

In accordance with the third aspect of the disclosed embodiment, a spacing between each of the at least one slats effects an incremental determination of the location of the autonomous transport vehicle.

In accordance with the third aspect of the disclosed embodiment, a spacing between each of the at least one slats effects an absolute determination of the location of the autonomous transport vehicle.

In accordance with a first sub-aspect of the third aspect of the disclosed embodiment, the controller is configured to compare a location of the autonomous transport vehicle at the time a slat is sensed with a predetermined location of the sensed slat for verifying the location of the autonomous transport vehicle.

In accordance with the first sub-aspect of the third aspect of the disclosed embodiment, the controller is configured to update a location of the autonomous transport vehicle when the location of the autonomous transport vehicle at the time a slat is sensed and the predetermined location of the sensed slat coincide.

In accordance with the first sub-aspect of the third aspect of the disclosed embodiment, the controller is configured to ignore the presence signal generated when the location of the autonomous transport vehicle at the time a slat is sensed and the predetermined location of the sensed slat do not coincide.

In accordance with the third aspect of the disclosed embodiment, the autonomous transport vehicle includes at least one wheel encoder, the controller being configured to obtain information from the wheel encoder and determine an estimated location of the autonomous transport vehicle from the wheel encoder information and based on a previously determined location of the autonomous transport vehicle.

In accordance with a fourth aspect of the disclosed embodiments a storage and retrieval system includes a storage structure having storage shelves, each storage shelf having slats for supporting stored items where the slats are spaced apart from each other by a predetermined distance; an autonomous transport vehicle including at least one sensor configured to sense each of the slats and output a signal indicating when a slat is sensed; and a controller for verifying a location of the autonomous transport vehicle within the storage structure based on at least the output signal.

In accordance with a first sub-aspect of the fourth aspect of the disclosed embodiments the controller is configured to compare a location of the autonomous transport vehicle at a time the slat is sensed with a predetermined location of the slat and updating a verified location of the autonomous transport vehicle if the locations substantially coincide.

In accordance with the first sub-aspect of the fourth aspect of the disclosed embodiments the controller is further configured to ignore the output signal of the at least one sensor where the locations do not substantially coincide.

In accordance with a second sub-aspect of the fourth aspect of the disclosed embodiments the controller is configured to continuously update an estimated location of the autonomous transport vehicle based on a last known verified location of the autonomous transport vehicle.

In accordance with the second sub-aspect of the fourth aspect of the disclosed embodiments the autonomous transport vehicle includes at least one wheel encoder and the controller is further configured to obtain wheel encoder information for updating the estimated location of the autonomous transport vehicle.

In accordance with the fourth aspect of the disclosed embodiments the autonomous transport vehicle is configured to align transfer arm fingers of the autonomous transport vehicle with spaces located between the slats of a respective storage shelf based on the determined location of the autonomous transport vehicle for extending the transfer arm fingers into the spaces without contacting the slats.

In accordance with the fourth aspect of the disclosed embodiments the autonomous transport vehicle includes a case unit detection sensor configured to detect case units located on the storage shelf and the controller is further configured to determine a position of the autonomous transport vehicle based on the sensed case units.

In accordance with a fifth aspect of the disclosed embodiments a storage and retrieval system includes at least one multilevel vertical conveyor having at least one shelf having support fingers; at least one wall adjacent the multilevel vertical conveyor, the wall including protrusions substantially aligned with the support fingers; an autonomous transport vehicle including at least one sensor configured to sense each of the protrusions and output a signal indicating when a protrusion is sensed; and a controller configured to determine a location of the autonomous transport vehicle relative to the support fingers based on the output signal from the at least one sensor.

In accordance with the fifth aspect of the disclosed embodiments the autonomous transport vehicle includes a transfer arm having transfer arm fingers, the autonomous transport vehicle is configured to align the transfer arm fingers with spaces located between the support fingers of the at least one shelf based on the determined location of the autonomous transport vehicle for extending the transfer arm fingers into a path of the shelf without substantial contact with the supporting fingers.

In accordance with the fifth aspect of the disclosed embodiments the at least one shelf includes at least two item holding locations and the autonomous transport vehicle includes a transfer arm, the autonomous transport vehicle being configured to align the transfer arm with one of the at least two item holding locations based on the output signal from the at least one sensor.

In a sixth aspect of the disclosed embodiment a storage and retrieval system is provided. The storage and retrieval system includes a transfer deck having a longitudinal axis, a first storage section and a second storage section. The first storage section and second storage section are located on opposite sides of the transfer deck and are substantially symmetrically opposed to one another about the longitudinal axis, where each of the first and second storage sections includes storage aisles that are in communication with the transfer deck.

In accordance with a first sub-aspect of the sixth aspect of the disclosed embodiment, the transfer deck includes a first end and a second end, the storage and retrieval system further comprising at least one multilevel vertical conveyor at one or more of the first and second end of the transfer deck.

In accordance with the first sub-aspect of the sixth aspect of the disclosed embodiment, the at least one multilevel vertical conveyor includes at least two multilevel vertical conveyors, one of the at least two multilevel vertical conveyors being located on a first side of the transfer deck and another of the at least two multilevel vertical conveyors being located on a second side of the transfer deck in a substantially symmetrically opposed configuration with the one of the at least two multilevel vertical conveyors.

In accordance with the first sub-aspect of the sixth aspect of the disclosed embodiment, each of the at least one multilevel vertical conveyor is connected to the transfer deck through a vestibule configured to allow access to a respective multilevel vertical conveyor without substantially disrupting a flow of objects along the transfer deck.

In accordance with the sixth aspect of the disclosed embodiment, the transfer deck provides access to each of the storage aisles.

In accordance with the sixth aspect of the disclosed embodiment, wherein the storage and retrieval system further includes at least one multilevel vertical conveyor connected to the transfer deck and at least one autonomous transport vehicle configured to traverse the transfer deck and storage aisles for transferring items between storage locations of the storage sections and the at least one multilevel vertical conveyor.

In accordance with the sixth aspect of the disclosed embodiment, each storage section comprises multiple levels of storage locations where each level is vertically stacked one above the other and the storage aisles comprise multiple vertically stacked levels where at least one storage aisle level is common to more than one level of storage locations. In a further aspect the storage and retrieval system further includes at least one autonomous transport vehicle configured to traverse the transfer deck and the storage aisles, the at least one autonomous transport vehicle being configured to access the more than one level of storage locations from the storage aisle level common to the more than one level of storage locations.

In accordance with the sixth aspect of the disclosed embodiment, each storage section comprises multiple levels of storage locations where each level is vertically stacked one above the other and the transfer deck comprises multiple vertically stacked levels corresponding to the levels of each of the storage sections.

In accordance the sixth aspect of the disclosed embodiment, each storage section includes multiple levels of storage locations where each level is vertically stacked one above the other and the transfer deck includes multiple vertically stacked levels where each transfer deck level is configured to provide access to more than one level of storage locations.

In accordance with a seventh aspect of the disclosed embodiment, a warehouse storage structure is provided. The storage structure includes a transfer deck having a longitudinal axis and at least one pair of storage sections where each of the at least one pair of storage sections includes a first storage section and a second storage section. The first storage section and second storage section of each of the at least one pair of storage sections having a substantially symmetrical opposed configuration relative to the longitudinal axis of the transfer deck, where each of the first and second storage sections includes storage aisles that are in communication with the transfer deck.

In accordance with a first sub-aspect of the seventh aspect of the disclosed embodiment, the warehouse storage structure further includes at least one multilevel vertical conveyor connected to the transfer deck.

In accordance with the first sub-aspect of the seventh aspect of the disclosed embodiment, wherein each of the at least one multilevel vertical conveyor is connected to the transfer deck through a vestibule configured to allow access to a respective multilevel vertical conveyor without substantially disrupting a flow of objects along the transfer deck.

In accordance with the first sub-aspect of the seventh aspect of the disclosed embodiment, the transfer deck includes a first end and a second end and the at least one multilevel vertical conveyor is connected to the transfer deck at one or more of the first and second end.

In accordance with the seventh aspect of the disclosed embodiment, the at least one pair of storage sections includes at least two pairs of storage sections, and the at least one multilevel vertical conveyor is connected to the transfer deck between the at least two pairs of storage sections.

In accordance with the seventh aspect of the disclosed embodiment, the transfer deck includes a lateral axis and the at least one pair of storage sections includes at least two pairs of storage sections disposed along the transfer deck in a substantially symmetrical configuration relative to the lateral axis.

In accordance with the seventh aspect of the disclosed embodiment, each storage section in the at least one pair of storage sections includes storage aisles connected to the transfer deck and the transfer deck includes transfer paths, the warehouse storage structure further including shunts connecting the transfer paths where each shunt is substantially in line with a respective storage aisle.

In accordance with the seventh aspect of the disclosed embodiment, each storage section comprises multiple levels of storage locations where each level is vertically stacked one above the other and the storage aisles comprise multiple vertically stacked levels where at least one storage aisle level is common to more than one level of storage locations. In a further aspect, the storage and retrieval system further includes at least one autonomous transport vehicle configured to traverse the transfer deck and the storage aisles, the at least one autonomous transport vehicle being configured to access the more than one level of storage locations from the storage aisle level common to the more than one level of storage locations.

In accordance with a eighth aspect of the disclosed embodiment, a storage and retrieval system includes an array of multilevel storage rack modules having storage areas separated by picking aisles where the storage areas includes shelves configured to allow placement of uncontained case units substantially anywhere along the shelves, multiple levels of stacked tiers, including at least one transfer deck and the picking aisles where each picking aisle provides access to multiple levels of the multilevel storage rack modules, and at least one autonomous transport vehicle located on one of the multiple levels of stacked tiers, the at least one autonomous transport vehicle being configured to traverse at least one transfer deck and picking aisles of at least one of the multiple levels of stacked tiers to transport at least one uncontained case unit to and from the multiple levels of the multilevel storage rack modules of a respective picking aisle, the at least one autonomous transport vehicle being configured to access each of the multiple levels of the multilevel storage rack modules of the respective picking aisle.

In accordance with an ninth aspect of the disclosed embodiment a maintenance access system for a storage and retrieval space having automated transport vehicles disposed in the storage and retrieval space is provided. The maintenance access system includes at least one maintenance access control unit associated with a portion of the storage and retrieval space, at least one barrier located in the storage and retrieval space and defining a boundary of the portion of the storage and retrieval space, the at least one barrier being configured to substantially prevent the passage of the automated transport vehicles past the at least one barrier, and a controller connected to the maintenance access control unit, the controller being configured to receive a signal from the at least one maintenance access control unit for isolating the portion of the storage and retrieval space associated with the at least one maintenance access control unit, where the controller in response to the signal closes the at least one barrier isolating the portion of the storage and retrieval space and effects the removal from or shutting down of autonomous transport vehicles within the portion of the storage and retrieval space.

In accordance with the ninth aspect of the disclosed embodiment, the portion of the storage and retrieval space forms a maintenance access zone including at least one picking aisle of the storage and retrieval system where the at least one picking aisle is arranged in a vertical stack of picking aisles.

In accordance with the ninth aspect of the disclosed embodiment, the portion of the storage and retrieval space forms a maintenance access zone including a transfer deck of the storage and retrieval system, where the transfer deck provides the autonomous transport vehicles access to one or more picking aisles and/or one or more multilevel vertical conveyor transfer areas.

In accordance with the ninth aspect of the disclosed embodiment, the portion of the storage and retrieval space forms a maintenance access zone including a multilevel conveyor transfer area where the multilevel conveyor transfer area allows the autonomous transport vehicles to transfer cases between the multilevel vertical conveyor and the picking aisles.

In accordance with a first sub-aspect of the ninth aspect of the disclosed embodiment, the storage and retrieval space includes multiple storage levels, each level including picking aisles, a transfer deck common to each picking aisle and multilevel vertical conveyor transfer areas connected to the transfer deck. The maintenance access system further including at least one barrier located at one or more of an end of at least one of the picking aisles, an entrance/exit of the multilevel vertical conveyor transfer areas and within the transfer deck.

In accordance with the first sub-aspect of the ninth aspect of the disclosed embodiment, the barriers include one or more of nets, fences and screens.

In accordance with the first sub-aspect of the ninth aspect of the disclosed embodiment, the barriers are motorized barriers that are actuated to substantially block the one or more of the end of at least one of the picking aisles, the entrance/exit of the multilevel vertical conveyor transfer areas and at least portions of the transfer deck.

In accordance with the ninth aspect of the disclosed embodiment, the portion of the storage and retrieval space forms a maintenance access zone the includes multiple picking aisles arranged in a vertical stack, where the picking aisle at the bottom of the stack includes a floor and the picking aisles above the picking aisle at the bottom of the stack within the maintenance access zone are substantially floorless.

In accordance with a tenth aspect of the disclosed embodiment a storage and retrieval system includes a multilevel storage structure including a plurality of storage locations arranged on sides of picking aisles where the picking aisles are connected to each other and at least one multilevel vertical conveyor by a transfer deck; at least one autonomous transport vehicle configured to travel along the picking aisles and transfer deck for transferring case units between the storage locations and the at least one conveyor; and a maintenance access system including vertically stacked maintenance access zones disposed coincident with the picking aisles, where each maintenance access zone provides access to at least multiple levels of picking aisles and storage locations corresponding to the multiple levels of picking aisles.

In accordance with the tenth aspect of the disclosed embodiment, the multiple levels of picking aisles are arranged in a vertical stack and the picking aisle at the bottom of the stack includes a floor and the picking aisles above the picking aisle at the bottom of the stack for a respective maintenance access zone are substantially floorless.

In accordance with a first sub-aspect of the tenth aspect of the disclosed embodiment, the storage and retrieval system further includes at least one maintenance access control unit; at least one barrier corresponding to a respective maintenance access zone, the at least one barrier being configured to substantially prevent the passage of the automated transport vehicles past the at least one barrier; and a controller connected to the maintenance access control unit, the controller being configured to receive a signal from the at least one maintenance access control unit for isolating a portion of the storage and retrieval system associated with the at least one maintenance access control unit where the controller effects the removal from or shutting down of autonomous transport vehicles within the portion of the storage and retrieval system.

In accordance with a first sub-aspect of the tenth aspect of the disclosed embodiment, each of the at least one multilevel vertical conveyor includes a transfer area and the at least one barrier is disposed at one or more of an end of at least one of the picking aisles, an entrance/exit of the multilevel vertical conveyor transfer area and within the transfer deck.

In accordance with a first sub-aspect of the tenth aspect of the disclosed embodiment, the at least one barrier includes one or more of nets, fences and screens.

In accordance with a first sub-aspect of the tenth aspect of the disclosed embodiment, the at least one barrier comprises at least one motorized barrier that is actuated to substantially block the one or more of the end of at least one of the picking aisles, the entrance/exit of the multilevel vertical conveyor transfer areas and at least portions of the transfer deck.

In accordance with the tenth aspect of the disclosed embodiment, the storage and retrieval system further includes at least one maintenance personnel cart configured to allow maintenance personnel to traverse the maintenance access zones.

In accordance with the tenth aspect of the disclosed embodiment, the transfer deck comprises multiple maintenance access zones configured such that a portion of the transfer deck associated with one maintenance access zone can be disabled while another portion of the transfer deck associated with another maintenance access zone remains operational.

In accordance with an eleventh aspect of the disclosed embodiment, a storage and retrieval system is provided. The storage and retrieval system includes a storage shelf structure having stationary positioning determining features with respect to a reference feature of the storage shelf structure where the positioning determining features are spaced apart from each other by a predetermined distance, an autonomous transport vehicle including at least one sensor configured to sense each of the positioning determining features and output a signal when a target is sensed as the autonomous transport vehicle moves past the positioning determining features, where the bot is configured for both mechanically constrained travel and mechanically unconstrained travel, and a controller configured to verify a location of the autonomous transport vehicle relative to the storage shelf structure based on at least the output signal.

In accordance with the eleventh aspect of the disclosed embodiment, the targets include slats forming part of the storage shelf structure and configured to support stored items on the storage shelf structure.

In accordance with a first sub-aspect of the eleventh aspect of the disclosed embodiment, the storage and retrieval system further includes rails disposed in picking aisles and configured to mechanically constrain travel of the autonomous transport vehicle and to provide access to the storage shelves wherein the positioning determining features include apertures formed in the rails.

In accordance with the first sub-aspect of the eleventh aspect of the disclosed embodiment, the positioning determining features are of unitary construction with the storage shelf structure that defines the positioning determining features.

In accordance with the eleventh aspect of the disclosed embodiment, the at least one sensor includes an optical sensor.

In accordance with the eleventh aspect of the disclosed embodiment, the at least one sensor includes a proximity sensor.

In accordance with the eleventh aspect of the disclosed embodiment, the at least one sensor includes a Hall effect sensor.

In accordance with a second sub-aspect of the eleventh aspect of the disclosed embodiment, the positioning determining features include radio devices disposed at predetermined locations on supports of the storage structure and the at least one sensor includes at least an antenna for interrogating the radio devices and obtaining information regarding a predetermined location of an interrogated radio device.

In accordance with the second sub-aspect of the eleventh aspect of the disclosed embodiment, the positioning determining features and at least the antenna are configured to provide a position of the autonomous transport vehicle upon an initialization of the autonomous transport vehicle.

**Claims**

1. A storage and retrieval system comprising:

   a multilevel storage structure including a plurality of storage locations arranged on sides of picking aisles where the picking aisles are connected to each other and at least one multilevel vertical conveyor by a transfer deck, the transfer deck being disposed between each of the picking aisles;
   at least one autonomous transport vehicle configured to travel along the picking aisles and transfer deck for transferring case units between the storage locations and the at least one conveyor; and
   a maintenance access system including vertically stacked maintenance access zones disposed coincident with and defined at least in part by the picking aisles, where each maintenance access zone provides access to at least multiple levels of picking aisles and storage locations corresponding to the multiple levels of picking aisles.

2. The storage and retrieval system of claim 1, wherein the multiple levels of picking aisles are arranged in a vertical stack and the picking aisle at the bottom of the stack includes a floor and the picking aisles above the picking aisle at the bottom of the stack for a respective maintenance access zone are substantially floorless.

3. The storage and retrieval system of claim 1, further comprising:

at least one maintenance access control unit;
at least one barrier corresponding to a respective maintenance access zone, the at least one barrier being configured to substantially prevent the passage of the automated transport vehicles past the at least one barrier; and
a controller connected to the maintenance access control unit, the controller being configured to receive a signal from the at least one maintenance access control unit for isolating a portion of the storage and retrieval system associated with the at least one maintenance access control unit where the controller effects the removal of operative automated transport vehicles from and shutting down of inoperative autonomous transport vehicles within the portion of the storage and retrieval system.

4. The storage and retrieval system of claim 3, wherein each of the at least one multilevel vertical conveyor includes a transfer area and the at least one barrier is disposed at one or more of an end of at least one of the picking aisles, an entrance/exit of the multilevel vertical conveyor transfer area and within the transfer deck.

5. The storage and retrieval system of claim 3, wherein the at least one barrier includes one or more of nets, fences and screens.

6. The storage and retrieval system of claim 3, wherein the at least one barrier comprises at least one motorized barrier that is actuated to substantially block the one or more of the end of at least one of the picking aisles, the entrance/exit of the multilevel vertical conveyor transfer areas and at least portions of the transfer deck.

7. The storage and retrieval system of claim 1, further comprising at least one maintenance personnel cart configured to allow maintenance personnel to traverse the maintenance access zones.

8. The storage and retrieval system of claim 1, wherein the transfer deck comprises multiple maintenance access zones configured such that a portion of the transfer deck associated with one maintenance access zone can be disabled while another portion of the transfer deck associated with another maintenance access zone remains operational.

9. The maintenance access system of claim 11, wherein the portion of the storage and retrieval system forms a maintenance access zone including a transfer deck of the storage and retrieval system, where the transfer deck provides the autonomous transport vehicles access to one or more picking aisles and/or one or more multilevel vertical conveyor transfer areas.

10. The maintenance access system of claim 11, wherein the portion of the storage and retrieval system forms a maintenance access zone including a multilevel conveyor transfer area where the multilevel conveyor transfer area allows the autonomous transport vehicles to transfer cases between the multilevel vertical conveyor and the picking aisles.

11. A method of operating an automated warehouse system comprising:

providing a storage and retrieval space with storage locations, a portion of the storage and retrieval space having at least one store shelf;
providing at least one autonomous transport vehicle that travels within the storage and retrieval space;
disposing human access zones, each human access zone having at least one human access control unit associated with the at least one store shelf at different levels within the portion of the storage and retrieval space;
providing a control device located in the storage and retrieval space, the control device defining a boundary of the portion of the storage and retrieval space, the at least one control device being configured to stop the passage of the automated transport vehicles past the at least one control device; and
signaling, with a controller communicably connected to the control device, a status change of the at least one human access control unit to isolate the portion of the storage and retrieval space associated with the human access control unit;
wherein in response to the signal from the controller, the at least one autonomous transport vehicle within a corresponding human access zone stops, while other autonomous transport vehicles outside of the corresponding human access zone continue operation in the storage and retrieval space outside the corresponding human access zone.

12. The method of claim 11, further comprising providing the at least one autonomous transport vehicle with a transfer arm configured to transfer items to and from the storage locations of the storage and retrieval space.

13. The method of claim 11, further comprising transferring case units to and from the storage locations of the storage and retrieval space with the at least one autonomous transport vehicle.

14. The method of claim 11, further comprising providing the at least one autonomous transport vehicle access, with a transfer deck, to at least one of one or more picking aisles and one or more vertical lift transfer areas disposed in the storage and retrieval space.

15. The method of claim 11, further comprising transferring items between a vertical lift and the storage locations of the storage and retrieval space with the at least one autonomous transport vehicle at a vertical lift transfer area.

FIG.1A

EP 4 234 443 A2

2700

COMPUTER
WORKSTATION

CONTROL
SERVER

—120

150A

2720

2730

295

170

170

295

FIG.1B

FIG.2

FIG.3

EP 4 234 443 A2

FIG.4

FIG.5

FIG.6

FIG.7A

FIG.7C

FIG.7B

EP 4 234 443 A2

FIG.8

FIG.9

FIG.10

PROVIDE SPACED APART
SLATS ON STORAGE SHELF — 900

PROVIDE ONE OR MORE
SENSORS ON AUTOMATED BOT — 910

SENSE SLATS WITH THE
SENSORS — 920

PRODUCE AN "ON/OFF" SLAT
PRESENCE OUTPUT SIGNAL
WITH ONE OR MORE SENSORS — 930

COMPARE LOCATION OF THE
BOT DURING TIMES THE
SIGNAL IS "ON" (SLAT PRESENT)
WITH PREDETERMINED SLAT
LOCATIONS — 940

QUALIFY POSITION OF BOT
WITHIN PICKING AISLE BASED
ON COMPARISON — 950

UPDATE POSITION OF BOT
WITH WHEEL ENCODER — 960

FIG.11

**FIG.12**

PROVIDE FALSE SLATS IN
CONVEYOR TRANSFER AREA — 1500

PROVIDE ONE OR MORE
SENSORS ON AUTOMATED BOT — 1510

SENSE FALSE SLATS WITH THE
SENSORS — 1520

PRODUCE AN "ON/OFF" SLAT
PRESENCE OUTPUT SIGNAL
WITH ONE OR MORE SENSORS — 1530

COMPARE LOCATION OF THE
BOT DURING TIMES THE SIGNAL
IS "ON" (FALSE SLAT PRESENT)
WITH PREDETERMINED FALSE SLAT
LOCATIONS — 1540

QUALIFY POSITION OF BOT
WITHIN TRANSFER AREA BASED
ON COMPARISON — 1550

UPDATE POSITION OF BOT
WITH WHEEL ENCODER — 1560

FIG.13

FIG. 14

FIG.15

FIG.16

FIG.17

EP 4 234 443 A2

FIG.17A

FIG.17B

ACTIVATE LOCK OUT CONTROL UNIT —191000

REMOVE BOTS FROM MAINTENANCE ACCESS ZONE/STOP MOVING STRUCTURES —191001

PUT BARRIERS IN PLACE —191002

PROVIDE ACCESS TO MAINTENANCE ACCESS ZONE —191003

FIG.18

FIG.19

FIG.20A

FIG.20B

FIG.20C

FIG.20D

FIG.20E

FIG.20F

FIG.20G

FIG.20H

FIG.21

FIG.22

FIG. 23

FIG.24

FIG.25

FIG.26

FIG.27

EP 4 234 443 A2

FIG.28

FIG.29

EP 4 234 443 A2

FIG.30

EP 4 234 443 A2

FIG.31

FIG.31A

```
┌─────────────────────────────┐
│   PROVIDE  ONE  OR  MORE     │──2500
│  SENSORS  ON  AUTOMATED BOT  │
└─────────────────────────────┘
              │
              ▼
┌─────────────────────────────┐
│   PROVIDE  SPACED  APART     │──2510
│      TARGETS  ON  RAIL       │
└─────────────────────────────┘
              │
              ▼
┌─────────────────────────────┐
│   SENSE  TARGETS  WITH  THE  │──2520
│          SENSORS             │
└─────────────────────────────┘
              │
              ▼
┌─────────────────────────────┐
│  PRODUCE  AN  "ON/OFF"  TARGET │──2530
│   PRESENCE  OUTPUT  SIGNAL   │
│  WITH  ONE  OR  MORE  SENSORS │
└─────────────────────────────┘
              │
              ▼
┌─────────────────────────────┐
│   COMPARE  LOCATION  OF  THE │──2540
│  BOT  DURING  TIMES  THE  SIGNAL │
│   IS  "ON"  (TARGET  PRESENT) │
│  WITH  PREDETERMINED  TARGET │
│         LOCATIONS            │
└─────────────────────────────┘
              │
              ▼
┌─────────────────────────────┐
│   QUALIFY  POSITION  OF  BOT │──2550
│  WITHIN  PICKING  AISLE  BASED │
│        ON  COMPARISON        │
└─────────────────────────────┘
              │
              ▼
┌─────────────────────────────┐
│   UPDATE  POSITION  OF  BOT  │──2560
│    WITH  WHEEL  ENCODER      │
└─────────────────────────────┘
```

# FIG.32

68

FIG.33

EP 4 234 443 A2

FIG.34

**EP 4 234 443 A2**

**Patent documents cited in the description**

- US 32703511
- US 61423206
- US 32656511
- US 61423308
- US 32667411
- US 61423340
- US 75722010
- US 327088
- US 75735410
- US 757220
- US 75731210
- US 61423220 B
- US 32704011
- US 61423365 B
- US 32695211
- US 61423388 B
- US 32699311
- US 75733710
- US 75738110
- US 61423340 B
- US 757381
- US 61423359 B
- US 32644711
- US 757354
- US 757312
- US 757337
- US 326952
- US 61423365
- US 327040
- US 61423220